# EUROPEAN PATENT APPLICATION

(11) **EP 4 811 879 A1**
(43) Date of publication of application: **23.09.2026**
(21) Application number: 24916074.8
(22) Date of filing: 12.01.2024
(51) Int. Cl.: H04W 52/02, H04W 48/08

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); YU, Xinlei, Dongguan, Guangdong 523860 (CN)
(74) Representative: RGTH
(86) International application number: PCT/CN2024/072011
(87) International publication number: WO 2025/148005

(57) **Abstract**

Provided are a wireless communication method, a terminal device, and a network device. The method comprises: a terminal device receives one or more of the following information sent by a network device: information of an NES cell; and indication information used for controlling the terminal device to access the NES cell or controlling the access of the NES cell.

## Description

### TECHNICAL FIELD

This application relates to the field of communications technologies, and more specifically, to a wireless communication method, a terminal device, and a network device.

### BACKGROUND

In a network energy saving (network energy saving, NES) scenario, there is currently no specific solution for how a terminal device operates in an NES cell.

### SUMMARY

This application provides a wireless communication method, a terminal device, and a network device. Various aspects of this application are described below.

According to a first aspect, a wireless communication method is provided, and the method includes: receiving, by a terminal device, one or more of following information transmitted by a network device: information of an NES cell; or indication information, used to control the terminal device to access the NES cell, or control access to the NES cell.

According to a second aspect, a wireless communication method is provided, and the method includes: transmitting, by a network device, one or more of following information to a terminal device: information of an NES cell; or indication information, used to control the terminal device to access the NES cell, or control access to the NES cell.

According to a third aspect, a terminal device is provided, and includes: a communications module, configured to receive one or more of following information transmitted by a network device: information of an NES cell; or indication information, used to control the terminal device to access the NES cell, or control access to the NES cell.

According to a fourth aspect, a network device is provided, and includes: a communications module, configured to transmit one or more of following information to a terminal device: information of an NES cell; or indication information, used to control the terminal device to access the NES cell, or control access to the NES cell.

According to a fifth aspect, a terminal device is provided, and the terminal device includes a transceiver, a memory, and a processor, where the memory is configured to store a program, and the processor is configured to invoke the program in the memory, and control the transceiver to receive or transmit a signal, to cause the terminal device to execute the method according to the first aspect.

According to a sixth aspect, a network device is provided, and the network device includes a transceiver, a memory, and a processor, where the memory is configured to store a program; and the processor is configured to invoke the program in the memory, and control the transceiver to receive or transmit a signal, to cause the network device to execute the method according to the second aspect.

According to a seventh aspect, an apparatus is provided, including a processor configured to invoke a program from a memory, to cause the apparatus to execute the method according to the first aspect or the second aspect.

According to an eighth aspect, a chip is provided, including a processor configured to invoke a program from a memory, to cause a device installed with the chip to execute the method according to the first aspect or the second aspect.

According to a ninth aspect, a computer-readable storage medium is provided, where the computer-readable storage medium stores a program, and the program causes a computer to execute the method according to the first aspect or the second aspect.

According to a tenth aspect, a computer program product is provided, including a program, where the program causes a computer to execute the method according to the first aspect or the second aspect.

According to an eleventh aspect, a computer program is provided, where the computer program causes a computer to execute the method according to the first aspect or the second aspect.

In embodiments of this application, a network device indicates, to a terminal device, information of an NES cell and/or indication information used to control the terminal device to access the NES cell, facilitating operation of the terminal device in the NES cell.

### BRIEF DESCRIPTION OF DRAWINGS

FIG. 1 is an example diagram of a system architecture of a wireless communications system to which embodiments of this application are applicable.
FIG. 2 is a schematic flowchart of a wireless communication method according to an embodiment of this application.
FIG. 3 is a schematic flowchart of a possible implementation of the wireless communication method illustrated in FIG. 2.
FIG. 4 is a schematic flowchart of another possible implementation of the wireless communication method illustrated in FIG. 2.
FIG. 5 is a schematic structural diagram of a terminal device according to an embodiment of this application.
FIG. 6 is a schematic structural diagram of a network device according to an embodiment of this application.
FIG. 7 is a schematic diagram of an apparatus to which embodiments of this application are applicable.

### DESCRIPTION OF EMBODIMENTS

Technical solutions in this application are described below with reference to the accompanying drawings.

### Wireless communications system

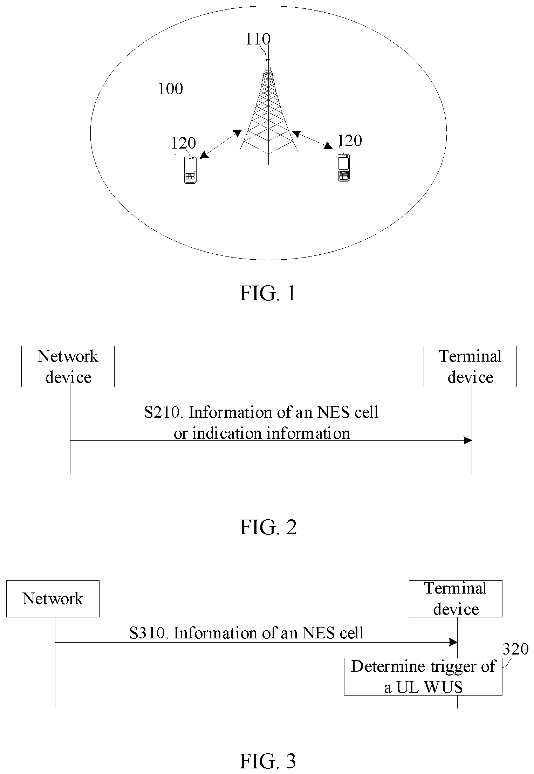

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide coverage for a specific geographical area, and may communicate with the terminal device 120 located within the coverage. The terminal device 120 may access a network (such as a wireless network) by using the network device 110. Optionally, the wireless communications system 100 may further include another network entity such as a network controller or a mobility management entity, which is not limited in embodiments of this application.

It should be understood that the technical solutions in embodiments of this application may be applied to various communications systems, for example, a 5G system or a new radio (new radio, NR) system, a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a user unit, a user station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to function as a base station. For example, the terminal device may function as a scheduling entity, which provides a sidelink signal between terminal devices in vehicle to everything (vehicle to everything, V2X), device to device (device to device, D2D), or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with a terminal device. The network device may be, for example, an access network device or a wireless access network device. For example, the network device may be a base station. The base station may broadly cover devices having the following various names, or may be replaced with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a home base station, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof.

### Application scenario of a communications system

Currently, main application scenarios of a communications system (such as 5G) may include: enhanced mobile broadband (enhance mobile broadband, eMBB), ultra-reliable and low-latency communications (ultra reliable low latency communications, URLLC), and massive machine type communication (massive machine type communication, mMTC).

The eMBB may be applied to a scenario in which a user obtains multimedia content, a service, data, and the like. The demand for the eMBB is growing rapidly. In addition, since the eMBB may be deployed in different environments, such as indoors, urban areas, and rural areas, capabilities and requirements for the eMBB vary greatly in different environments.

The URLLC may be applied to scenarios such as industrial automation, power automation, remote medical operations (surgery), and traffic safety assurance. Typical features of the mMTC include high connection density, small data volume, delay-insensitive services, low cost and long service life of modules, and the like.

### Radio resource control (radio resource control, RRC) state and mobility management

Currently, the protocol defines three RRC states of a terminal device: an RRC connected (RRC_connected) state, an RRC idle (RRC-idle) state, and an RRC inactive (RRC-inactive) state.

The RRC connected state may be a state of the terminal device presented after a random access procedure is completed but an RRC release is not performed. An RRC connection exists between the terminal device and a network device (for example, an access network device). In the RRC connected state, data transmission, such as downlink data transmission and/or uplink data transmission, may be performed between the terminal device and the network device. Alternatively, transmission of a data channel and/or control channel specific to the terminal device may be performed between the terminal device and the network device, to transmit specific information or unicast information of the terminal device.

In the RRC connected state, the network device may determine cell-specific location information of the terminal device; that is, the network device may determine a cell to which the terminal device belongs. In the RRC connected state, after the terminal device moves, for example, from one cell to another, the network device may control the terminal device to perform cell handover (handover). It may be learned that mobility management of the terminal device in the RRC connected state may include cell handover. In addition, the mobility management of the terminal device in the RRC connected state may be controlled by the network device. Accordingly, the terminal device may be handed over to a designated cell according to an instruction issued by the network device.

The RRC idle state is a state of the terminal device presented when the terminal device camps on a cell but does not perform random access. The terminal device usually enters the RRC idle state after being powered on or after an RRC release. In the RRC idle state, there is no RRC connection between the terminal device and the network device (for example, a network device camped on by the terminal device), a context of the terminal device is not stored in the network device, and no connection is established for the terminal device between the network device and a core network. If the terminal device is required to enter the RRC connected state from the RRC idle state, an RRC connection establishment process is initiated.

In the RRC idle state, the core network (core network, CN) may transmit a paging message to the terminal device; that is, a paging process may be triggered by the CN. Optionally, a paging area may also be configured by the CN. In some cases, for a terminal device in an RRC idle state, after the terminal device moves (for example, from one cell to another), the terminal device may initiate a cell reselection (cell reselection) process. In some other cases, for a terminal device in an RRC idle state, when the terminal device is required to access a cell, the terminal device may initiate a cell selection (cell selection) process. In other words, mobility management of the terminal device in the RRC idle state may include cell reselection and/or cell selection.

The RRC inactive state is a state defined in order to reduce air interface signalling, quickly restore wireless connections, and quickly restore data services. The RRC inactive state is a state between the connected state and the idle state. The terminal device has previously entered the RRC connected state and then released the RRC connection with the network device, but the network device has stored the context of the terminal device. In addition, the connection established for the terminal device between the network device and the core network has not been released. In other words, a user plane bearer and a control plane bearer between the RAN and the CN are still maintained; that is, there is a CN-NR connection.

In the RRC inactive state, the RAN may transmit a paging message to the terminal device; that is, a paging process may be triggered by the RAN. An RAN-based paging area is managed by the RAN, and a location of the terminal device that can be learned by the network device is at the level of the RAN-based paging area.

In some cases, for a terminal device in an RRC inactive state, after the terminal device moves (for example, from one cell to another), the terminal device may initiate a cell reselection procedure. In some other cases, for a terminal device in an RRC inactive state, when the terminal device is required to access a cell, the terminal device may initiate a cell selection procedure. In other words, mobility management of the terminal device in the RRC inactive state may include cell reselection and/or cell selection.

### 5G NES project

Energy consumption has become an important part of operation costs of an operator. According to the report from the global system for mobile communications association (global system for mobile communications association, GSMA), energy costs of mobile networks account for approximately 23% of total costs of operators. Most of energy consumption comes from radio access networks, in particular, active antenna units (active antenna unit, AAU), while energy consumption of data centers and optical fiber transmission accounts for only a small share.

Energy consumption includes two types:
dynamic part: for example, energy consumption during data transmission/reception; and
static part: for example, energy consumption of an operation of maintaining necessary radio access devices, (even if there is no continuous data transmission or reception at this time).

This project should not only evaluate potential network energy consumption, but also evaluate and balance an impact on network and user performance. For example, this project should not have a particularly large impact on some key performance indicators (key performance indicator, KPIs). The KPIs mentioned herein include spectral efficiency, a capacity, user perceived throughput (user perceived throughput, UPT), a latency, terminal device power consumption, complexity, handover performance, a call drop rate, initial access performance, or the like.

Possible research directions for this project include defining procedures and signalling methods for a terminal device in a connected state and configured with carrier aggregation (carrier aggregation, CA, including intra-frequency/inter-frequency CA), to support on-demand (on-demand) SSB secondary cell (secondary scell, SCell) operations, for example, defining a triggering method for SSB transmission (selected from uplink wake-up signal (wake-up-signal, WUS), cell on/off indication via backhaul, secondary cell activation/deactivation signalling).

In addition, possible research directions for the project further include studying procedures and signaling methods for a terminal device in an idle state/inactive state to support on-demand transmission of a system information block 1 (system information block 1, SIB1), specifically, including one or more of the following: a triggering method for an uplink wake-up signal; configuration information of a wake-up signal provided to a terminal device; or information exchange between network devices (at least exchanging configuration information of wake-up signals).

The possible research directions for the project further include an adaptation (adaptation) technology that defines universal signal/channel transmission, for example, adaptation of a physical random access channel (physical random access channel, PRACH) in time domain; for another example, studying adaptation of PRACH in spatial domain; and for another example, adaptation of a paging occasion.

### NES cell

An NES cell may refer to a cell that uses an NES technology. The NES cell may include, for example, an SSB-less cell and/or a SIB1-less cell. The following describes the two types of cells.

In a related technology, a secondary cell may not transmit an SSB, but a premise is that the secondary cell is co-located (co-located) with a special cell (special cell, sPcell) or another intra-frequency secondary cell. If a terminal device has been synchronized with another cell and the cell is co-located with the SSB-less cell, the terminal device may perform communication in the SSB-less cell. It is assumed that a cell A and a cell B (secondary cell) are co-located, and the cell B is an SSB-less cell, the terminal device may obtain an SSB from the cell A for communication on the cell B, and the cell B never needs to transmit the SSB. In Release 18 (release 18, R18), a network energy saving project extended the foregoing scheme from an intra-frequency scenario to an inter-frequency scenario, that is, an SSB-less cell may obtain an SSB through another cell in an inter-frequency band.

In R19, the SSB-less cell may still serve as a working cell for a terminal device in a connected state. In addition, a SIB1-less cell is introduced in R19, and such an NES cell may be used as a working cell for a terminal device in an idle state/inactive state.

It can be seen from the foregoing description that a concept of the NES cell is introduced to implement the network energy saving project. However, there is currently no clear solution for how a terminal device operates in an NES cell (for example, how to access an NES cell; or how to obtain information of an NES cell).

To address the foregoing problems, the following describes embodiments of this application in detail.

FIG. 2 is a schematic flowchart of a wireless communication method according to an embodiment of this application. The method shown in FIG. 2 may be executed by a terminal device and a network device. The terminal device and the network device may be, for example, the terminal device 120 and the network device 110 mentioned above.

Referring to FIG. 2, in step S210, the terminal device receives information of an NES cell (or information of an NES frequency) transmitted by the network device. The NES cell may be a cell that uses an NES technology or supports an NES technology. For example, the NES cell may include an SSB-less cell and/or a SIB1-less cell. In embodiments of this application, the network device provides the information of the NES cell for the terminal device, which helps the terminal device to operate in the NES cell.

In some implementations, the information of the NES cell is obtained by using one or more of the following cells: a first cell, a cell on which the terminal device has previously camped, an anchor cell (anchor cell) of the NES cell, a cell that the terminal device has previously accessed; a cell on which the terminal device last camped; or a cell that last serves the terminal device. It should be understood that the first cell may be one of the following cells: a cell on which the terminal device has previously camped, an anchor cell (anchor cell) of the NES cell, a cell that the terminal device has previously accessed; a cell on which the terminal device last camped; or a cell that last serves the terminal device. Alternatively, the first cell may be another cell other than those listed above.

In some implementations, the information of the NES cell is information for the terminal device in an idle state or inactive state. That is to say, the information of the NES cell may be used by the terminal device in an idle state or inactive state.

The following describes the information of the NES cell in detail.

In some implementations, the information of the NES cell includes information 1. The information 1 is used to indicate one or more of the following: an association relationship between a first cell and the NES cell; or the NES cell associated with a first cell (that is, used to indicate cells included in the NES cell that are associated with a first cell). The NES cell associated with the first cell may be referred to as a list (list) of the NES cell.

In some implementations, the information of the NES cell includes information 2. The information 2 is used to indicate one or more of the following: a frequency of the NES cell, an SSB frequency of the NES cell, a cell identity of the NES cell, a physical cell identity (physical cell identifier, PCI) of the NES cell, or quasi co-located (quasi-colocation, QCL) relationship information of the NES cell. The foregoing information may be used to determine which cell is the NES cell. In the information of the NES cell, the information 2 and the information 1 may coexist. Alternatively, only one of the information 2 and the information 1 may exist.

In some implementations, the information of the NES cell includes configuration information of a first message. The first message may be used by the terminal device to transmit a request message. Alternatively, the first message may be used to request the NES cell to transmit part or all of cell common information (for example, a SIB1). The first message may be any type of message. For example, the first message is an uplink message or an uplink request message. For another example, the first message is an uplink wake-up signal (UL WUS). The configuration information of the first message may be used by the terminal device to transmit the first message.

Content of the configuration information of the first message is not specifically limited in embodiments of this application. For example, the configuration information of the first message includes, for example, one or more of the following: configuration information of a time domain resource of the first message (namely, time domain configuration), configuration information of a frequency domain resource of the first message (namely, frequency domain configuration), a preamble (preamble) corresponding to the first message, or beam (beam) direction information corresponding to the first message.

It should be understood that the configuration information of the first message may be common (common) configuration information. Alternatively, the configuration information of the first message may be configuration information of the first cell (that is, the configuration information may be used by all NES cells associated with the first cell). Alternatively, the configuration information of the first message may be information configured for each NES cell (per NES cell configuration information). Alternatively, the configuration information of the first message is information configured for a frequency of each NES cell (that is, per NES frequency configuration information). The configuration information of the first message may be a predefined configuration information, or may be information specified in a protocol (communication standard protocol).

In some implementations, the information of the NES cell includes a first condition or a first factor. The first condition or the first factor is used to trigger the terminal device to determine whether to transmit the first message. Alternatively, the first condition or first factor is used to determine whether a condition for transmitting the first message is met. Alternatively, the first condition or first factor is used to trigger transmission of the first message.

The first condition or the first factor may be set according to an actual situation. For example, the first condition or the first factor is associated with one or more of the following: a cell selection or reselection parameter, related information of data to be transmitted by the terminal device; a barring (bar) parameter, supported slice information; first information transmitted by the network device (used to indicate whether the terminal device is allowed to transmit the first message), whether the terminal device has received the SSB of the NES cell, whether the terminal device has received the SIB1 of the NES cell; signal quality of an SSB received by the terminal device, signal quality of the first cell, a difference between signal quality of the first cell and signal quality of the NES cell, a frequency priority corresponding to the first cell; or a frequency priority corresponding to the NES cell.

The cell selection or reselection parameter mentioned above may include one or more of the following: an intra-frequency selection parameter (intraFreqReselection), a parameter required by an S criterion, a parameter required by an R criterion, a slice supported by a cell or a frequency, a frequency priority, a cell set (list) allowed to be used, or a cell set (list) not allowed to be used.

The related information of data to be transmitted by the terminal device may be used to indicate a data status of the terminal device. For example, whether data of the terminal device arrives, and whether an amount of data to be transmitted by the terminal device is greater than or equal to a first threshold.

The foregoing first condition or first factor may be common (common), or may be configured for an NES cell (that is, a per NES cell), or may be configured for an NES frequency (that is, per NES frequency).

The foregoing first condition or the first factor may include, for example, one or more of the following: the NES cell meets a cell selection or reselection criterion, uplink data arrives at the terminal device, a data amount of uplink data to be transmitted by the terminal device is greater than or equal to a first threshold; the NES cell is not barred or prevented from accessing, the NES cell supports a slice required by the terminal device, the terminal device has received the SSB of the NES cell but has not received the SIB1, the terminal device detects the NES cell but has not received the SIB1, signal quality of the SSB is greater than or equal to a second threshold, signal quality of the NES cell is greater than or equal to a third threshold, signal quality of a current cell of the terminal device is less than or equal to a fourth threshold, a frequency priority corresponding to a current cell of the terminal device is less than a frequency priority corresponding to the NES cell, a current cell of the terminal device does not support a slice required by the terminal device, signal quality of the first cell is less than or equal to a fifth threshold, a frequency priority corresponding to the first cell is less than a frequency priority corresponding to the NES cell, the first cell does not support a slice required by the terminal device, or the first information indicates that the network device allows the terminal device to transmit the first message.

The following provides some more specific examples of the first condition or the first factor.

For example, in a case that the NES cell meets the cell selection or reselection criterion, the terminal device considers that the first condition is met, and/or the terminal device transmits the first message.

For another example, when uplink data arrives at the terminal device, or when the data amount of the uplink data is greater than or equal to the first threshold, the terminal device considers that the first condition is met, and/or the terminal device transmits the first message.

For another example, if the terminal device has obtained the SSB of the NES cell but has not obtained the SIB1, the terminal device considers that the first condition is met, and/or terminal device transmits the first message.

For another example, the terminal device has obtained the SSB of the NES cell, and SSB-based channel quality (that is, channel quality measured based on the SSB) is greater than or equal to the second threshold (for example, reference signal received power (reference signal receiving power, RSRP), reference signal received quality (reference signal receiving quality, RSRQ), received signal strength indication (received signal strength indication, RSSI), or the like is greater than or equal to the second threshold), but the terminal device has not obtained the SIB1. In this case, the terminal device considers that the first condition is met, and/or the terminal device transmits the first message.

For another example, channel quality of a currently camping cell of the terminal device is less than or equal to the third threshold, the terminal device has obtained an SSB of the NES cell, and SSB-based channel quality is greater than or equal to the second threshold (for example, RSRP, RSRQ, RSSI, or the like is greater than or equal to the second threshold), but the terminal device has not obtained the SIB1. In this case, the terminal device considers that the first condition is met, and/or the terminal device transmits the first message.

For another example, a frequency priority corresponding to a currently camping cell of the terminal device is less than a frequency priority of the NES cell, and the terminal device has obtained an SSB of the NES cell and channel quality based on the SSB is greater than or equal to the second threshold (for example, RSRP, RSRQ, RSSI or the like is greater than or equal to the second threshold), but the terminal device has not obtained the SIB1. In this case, the terminal device considers that the first condition is met, and/or the terminal device transmits the first message.

For another example, if the network device allows the terminal device to transmit the first message, the terminal device has obtained the SSB of the NES cell, and the SSB-based channel quality is greater than or equal to the second threshold (for example, RSRP, RSRQ, RSSI or the like is greater than or equal to the second threshold), but the terminal device has not obtained the SIB1, then the terminal device considers that the first condition is met, and/or the terminal device transmits the first message.

For another example, a frequency priority corresponding to a camping cell of the terminal device is less than a frequency priority corresponding to the NES cell, and the terminal device has obtained an SSB of the NES cell and channel quality based on the SSB is greater than or equal to the second threshold (for example, RSRP, RSRQ, RSSI or the like is greater than or equal to the second threshold), but the terminal device has not obtained the SIB1. In this case, the terminal device considers that the first condition is met, and/or the terminal device transmits the first message.

For another example, if the network device allows the terminal device to transmit the first message, the terminal device has obtained the SSB of the NES cell, and the SSB-based channel quality is greater than or equal to the second threshold (for example, RSRP, RSRQ, RSSI or the like is greater than or equal to the second threshold), but the terminal device has not obtained the SIB1, then the terminal device considers that the first condition is met, and/or the terminal device transmits the first message.

For another example, if the network device (for example, a base station) instructs the terminal device to access another cell (the NES cell), or transmit an RACH, or transmit the first message, the terminal device considers that the first condition is met, and/or the terminal device transmits a first message (further, the condition may be used together with another condition). Further, in some implementations, the network device may instruct, by using a paging message, the terminal device to access a cell or another cell on which the terminal device is currently camping, or the terminal device to transmit an RACH. For another example, the network may instruct, by using a paging message, the terminal device to transmit the first message in another cell.

In some implementations, the information of the NES cell includes state information of the NES cell. The state information of the NES cell may be used to indicate one or more of: whether the NES cell is in an energy saving state, whether the NES cell transmits the SIB1, or whether the NES cell is available. It can be learned that, based on the state information of the NES cell, the terminal device may learn whether the NES cell transmits a SIB1 message; or whether the terminal device needs to transmit an on-demand (on-demand) message to request the SIB1. Alternatively, the terminal device may learn a status of the NES cell depending on whether the SIB1 can be read from the NES cell.

In some implementations, the information of the NES cell includes part or all of information (or information element (information element, IE)) in the SIB1 of the NES cell. The part or all of the information in the SIB1 of the NES cell may be used to perform one or more of cell selection, reselection, RACH, or other operations.

In some implementations, the information of the NES cell includes part or all of information of another SIB, different form the SIB1, in the NES cell.

The content of information of the NES cell is described above in detail. The following describes in detail how to acquire the information of the NES cell (or a bearer mode).

The information of the NES cell may be obtained through indication information of the network device (such as a base station). For example, the information of the NES cell is indicated by using a first SIB message. The first SIB message may be one of the following: a new SIB message (for example, a SIBX message), an existing SIB message, or a SIB message obtained by extending an existing SIB message. Optionally, for example, the first SBI message is a SIBX message, then the terminal device obtains the information of the NES cell from a SIBX message transmitted by a previously camped cell, an anchor cell of the NES cell, or a previously accessed cell.

For another example, the information of the NES cell is indicated by using an RRC message. The RRC message may be, for example, a dedicated RRC message, such as an RRC release message. For example, the terminal device may acquire the information of the NES cell from an RRC release message transmitted by a previously accessed cell.

In some implementations, after the information of the NES cell is obtained, the terminal device may determine the NES cell or information of an NES frequency based on the information of the NES cell. Alternatively, the terminal device may determine, based on the information of the NES cell, whether an NES cell exists. Alternatively, the terminal device may determine, based on the information of the NES cell, whether further information of the NES cell needs to be requested (for example, transmit an on-demand (on-demand) message to request the NES cell to transmit a SIB1).

According to the foregoing method for obtaining the information of the NES cell, the terminal device can learn the information of the NES cell, and determine whether an NES cell exists and/or whether further information of the NES cell is requested (for example, transmit an on-demand (on-demand) message to request the NES cell to transmit a SIB1), thereby helping the terminal device work in the NES cell.

In some implementations, the terminal device described above may camp on the first cell; or the terminal device may camp on the NES cell.

In some implementations, the terminal device described above may be referred to as a first terminal device. Further, in some implementations, the first terminal device camps on the NES cell in the following cases: transmitting the first message (for description of the first message, refer to the foregoing description), acquiring part or all common information of the NES cell, or the NES cell being not in an energy saving state. The first terminal device mentioned herein may include, for example, one or more of the following: a terminal device that supports NES, a terminal device defined in 3rd Generation Partnership Project (3rd generation partnership project, 3GPP) Release 19, a terminal device that supports SSB-less, a terminal device that supports SIB1-less, or a terminal device that supports an adaptive NES technology (such as an adaptive SSB/RACH/paging technology).

In some implementations, a second terminal device cannot camp on the NES cell. The second terminal device mentioned herein may be, for example, a terminal device different from the first terminal device, a terminal device that does not support NES, a terminal device that does not support a specific NES technology, a legacy (legacy) terminal device, or a non-NES terminal device.

Still referring to FIG. 2, in step S210, the terminal device also receives indication information transmitted by the network device. The indication information may be used to control the terminal device to access the NES cell. Alternatively, the indication information may be used to control access of the NES cell. In some implementations, the "access" mentioned herein may be replaced with "camping on", "selecting", "reselection", or the like.

In some implementations, the indication information transmitted by the network device includes one or more of the following: first indication information and a barring (bar) parameter.

The barring parameter may be an existing barring parameter. For example, the barring parameter may be a barring indication (cellReservedForOperatorUse, cellReservedForOtherUse, or cellReservedForFutureUse) in cellbarred or SIB1 in a master information block (master information block, MIB). Access of a legacy (legacy) terminal device may be controlled based on the existing barring parameter.

The first indication information may be used to control the terminal device to access the NES cell or control access of the NES cell. The first indication information may be a new access control parameter introduced in embodiments of this application. The first indication information may indicate whether the terminal device is allowed to access the NES cell. Alternatively, the first indication information may indicate a cell type (for example, whether the cell is an NES cell). A bearer location of the first indication information is not specifically limited in embodiments of this application. For example, the first indication information is carried in a MIB or a SIB. For example, the first indication information is carried in the SIB1.

After receiving the indication information of the network device, the terminal device may determine, based on the indication information, whether a network may be accessed. The network mentioned herein may refer to an NES cell or an NES base station. The NES cell or the NES base station may include one or more of the following: an SSB-less cell or base station, a SIB1-less cell or base station, a cell or base station that uses an NES technology (for example, a cell or base station that uses or supports an adaptive SSB/RACH/paging technology, and the adaptative mentioned herein may be spatial domain adaptive or time domain adaptive).

The following describes in detail how the terminal device determines, based on the barring parameter and/or the first indication information, whether an NES cell is capable of being accessed (or selecting an NES cell or reselecting an NES cell) by using examples.

In some implementations, the terminal device is not allowed to access the NES cell in a first case. The first case includes one or more of the following: no SIB1 transmitted from the NES cell is received, the barring parameter indicates a barring cell, part of or no common information is received from the NES cell; or the NES cell is in an energy saving state. The terminal device mentioned herein may be any type of second terminal device mentioned above.

In a specific example, if the terminal device is a legacy terminal device, access to the NES cell is not allowed in principle for the legacy terminal device. The legacy terminal device may perform access control based on an existing barring parameter. In specific implementation, there may be the following two solutions. Solution 1: If the terminal device cannot acquire the SIB1, the terminal device cannot camp on the NES cell, or select the NES cell, or reselect the NES cell. Solution 2: Access, selection, or reselection of the NES cell of the legacy terminal device may be controlled based on an existing barring parameter, for example, access, selection, or reselection of the NES cell of the legacy terminal device based on cellbarred in the MIB, and/or a bar indication (cellReservedForOperatorUse, or cellReservedForOtherUse, or cellReservedForFutureUse) in the SIB1.

In some implementations, whether the terminal device is allowed to access the NES cell is determined based on one or more of the following: whether a second message (a message carrying the first indication information) carries the first indication information (whether the second message carries the first indication information may also be understood or replaced with whether the first indication information exists or presents), indication content of the first indication information, or indication content of a barring parameter. The terminal device mentioned herein may be, for example, the first terminal device mentioned above. For the first terminal device, in principle, the first terminal device may be allowed to access, select or reselect the NES cell. However, whether the first terminal device is capable of accessing, selecting or reselecting the NES cell may be determined based on the first indication information and/or the barring parameter.

In some implementations, whether the terminal device is allowed to access, select or reselect the NES cell may be determined depending on whether the second message carries the first indication information (or whether the first indication information exists or presents). The first indication information may indicate a cell type (for example, whether the cell is an NES cell). For example, if the second message carries the first indication information (or the first indication information exists or presents), the terminal device is allowed to access the NES cell. For another example, if the second message does not carry the first indication information (or the first indication information does not exist or does not present), the terminal device is allowed to access the NES cell. Further, optionally, the terminal device may ignore the barring parameter.

In some implementations, whether the terminal device is allowed to access, select or reselect the NES cell may be determined based on content of the first indication information. For example, if the first indication information indicates that cell access is allowed (not barred), the terminal device is allowed to access the NES cell. For another example, if the first indication information indicates that cell access is not allowed (barred), the terminal device is not allowed to access the NES cell. Further, optionally, the terminal device may ignore the barring parameter.

In some implementations, whether the terminal device is allowed to access, select or reselect the NES cell may be determined based on the first indication information and the barring parameter.

For example, if the barring parameter indicates that cell access is not allowed (for example, a value of cellbarred is barred), and the first indication information indicates that cell access is allowed (not barred), the terminal device is allowed to access the NES cell.

For another example, if the barring parameter indicates that cell access is not allowed (for example, a value of cellbarred is barred), and the first indication information indicates that cell access is not allowed (barred), the terminal device is not allowed to access the NES cell.

For another example, if the barring parameter indicates that cell access is allowed (for example, a value of cellbarred is not barred), the terminal device is allowed to access the NES cell.

For another example, if the barring parameter indicates that cell access is allowed (for example, a value of cellbarred is not barred), and the first indication information indicates that cell access is allowed (not barred), the terminal device is allowed to access the NES cell.

For another example, if the barring parameter indicates that cell access is allowed (for example, a value of cellbarred is not barred), and the first indication information indicates that cell access is not allowed (barred), the terminal device is not allowed to access the NES cell.

For another example, if the barring parameter indicates that cell access is not allowed (for example, a value of cellbarred is barred), and the second message carries the first indication information (or the first indication information presents or exists), the terminal device is allowed to access the NES cell.

For another example, if the barring parameter indicates that cell access is not allowed (for example, a value of cellbarred is barred), and the second message does not carry the first indication information (or the first indication information does not present or does not exist), the terminal device is not allowed to access the NES cell.

For another example, if the barring parameter indicates that cell access is allowed (for example, a value of cellbarred is not barred), the terminal device is allowed to access the NES cell.

For another example, if the barring parameter indicates that cell access is allowed (for example, a value of cellbarred is not barred), and the second message carries the first indication information (or the first indication information presents or exists), the terminal device is allowed to access the NES cell.

For another example, if the barring parameter indicates that cell access is allowed (for example, a value of cellbarred is not barred), and the second message does not carry the first indication information (or the first indication information does not present or does not exist), the terminal device is allowed to access the NES cell.

For another example, if the barring parameter indicates that cell access is allowed (for example, a value of cellbarred is not barred), and the second message does not carry the first indication information (or the first indication information does not present or does not exist), the terminal device is not allowed to access the NES cell.

In some implementations, the first indication information mentioned above may further include a plurality of pieces of sub-information. The plurality of pieces of sub-information are in a one-to-one correspondence with a plurality of NES technologies (such as an adaptive SSB/RACH/Paging technology). A respective piece of sub-information in the plurality of pieces of sub-information is used to indicate: whether a cell supports an NES technology corresponding to the respective piece of sub-information; or whether a terminal device that supports an NES technology corresponding to the respective piece of sub-information is allowed to access a cell; or whether a cell supports an NES technology corresponding to first sub-information, where the first sub-information is one of the plurality of pieces of sub-information; or whether a terminal device that supports an NES technology corresponding to the first sub-information is allowed to access a cell.

In some implementations, use of the plurality of pieces of sub-information may be subject to a specific condition. For example, in a case that a second condition is met, whether the terminal device is allowed to access NES cell is determined based on at least part of information in the plurality of pieces of sub-information, or whether the terminal device is allowed to access the NES cell is determined based on at least part of information in the first sub-information, the second condition includes one or more of the following: the first indication information indicates that cell access is allowed, the first indication information indicates that cell access is not allowed, a second message carries the first indication information, a second message does not carry the first indication information, the first sub-information exists or presents in the first indication information, the first sub-information indicates permission, the barring parameter is ignored, or the barring parameter indicates permission.

In some implementations, whether a terminal device that supports a specific NES technology is capable of accessing the NES cell is controlled or determined based on sub-information corresponding to the specific NES technology; or whether a specific terminal device is capable of accessing the NES cell is controlled or determined based on corresponding sub-information; or whether a specific terminal device is capable of accessing the NES cell is controlled or determined based on the first sub-information.

In some implementations, the first indication information mentioned above may include a plurality of pieces of second indication information, the plurality of pieces of second indication information are in a one-to-one correspondence with a plurality of NES technologies, and a respective piece of second indication information in the plurality of pieces of second indication information is used to indicate: whether a cell supports an NES technology corresponding to the respective piece of second indication information; or whether a terminal device that supports an NES technology corresponding to the respective piece of second indication information is allowed to access a cell; or whether a cell supports an NES technology corresponding to target information, where the target information is one of the plurality of pieces of second indication information; or whether a terminal device that supports an NES technology corresponding to the target information is allowed to access a cell.

In some implementations, use of the plurality of pieces of second indication information may be subject to a specific condition. For example, in a case that a third condition is met, whether the terminal device is allowed to access the NES cell is determined based on at least part of information in the plurality of pieces of second indication information, or whether the terminal device is allowed to access the NES cell is determined based on at least part of information in the target information. The third condition includes one or more of the following: the first indication information indicates that cell access is allowed, the first indication information indicates that cell access is not allowed, a second message carries the first indication information, a second message does not carry the first indication information, the target information exists or presents in the first indication information, the target information indicates permission, the barring parameter is ignored, or the barring parameter indicates permission.

In some implementations, whether the terminal device that supports a specific NES technology is capable of accessing the NES cell is controlled or determined based on the second indication information corresponding to the specific NES technology; or whether a specific terminal device is capable of accessing the NES cell is controlled or determined based on corresponding second indication information; or whether the specific terminal device is capable of accessing the NES cell is controlled or determined based on the target information.

The following describes embodiments of this application in more detail with reference to specific examples. It should be noted that the embodiments below are merely intended to help a person skilled in the art understand embodiments of this application, and are not intended to limit embodiments of this application to a specific value or a specific scenario that is exemplified. Apparently, those skilled in the art may make various equivalent modifications or variations based on the embodiments, and such modifications or variations also fall within the scope of embodiments of this application.

### Embodiment 1 (A method for obtaining information of an NES cell)

Referring to FIG. 3, a network transmits information of an NES cell (or information of an NES frequency) to a terminal device (refer to step S310 in FIG. 3). The information of the NES cell includes one or more of the following content.

| Content | Function |
|---|---|
| List of NES cells associated with a cell that transmits the information of the NES cell | Used to indicate NES cells that are associated with a local cell (anchor cell). The information may co-exist with an SSB frequency/PCI/QCL relationship information of the NES cell, or only one of the information exists. |
| SSB frequency, PCI and QCL relationship information of the NES cell | Used to learn which NES cell is. |
| UL WUS configuration information The configuration information may include one or more of the following: a time domain configuration, a frequency domain configuration, a preamble, or a beam direction. | The information may be used to configure a resource of a UL WUS. The resource is used by the terminal device to transmit an uplink message or a request, to request an NES cell to transmit common information or part of common information, such as a SIB1. |
| Optionally, the UL WUS configuration information may be common, or may be configured per NES cell/frequency. | |
| Optionally, the UL WUS configuration may be predefined or specified by a protocol. | |
| Trigger condition for transmitting a UL WUS | The trigger condition is used by the terminal device to transmit request information by using a UL WUS configuration resource when the condition is met. |
| The trigger condition may include one or more of the following: a parameter for an existing cell selection or reselection (including at least one of the following parameters: intraFreqReselection, a parameter required by an S criterion, a parameter required by an R criterion, a slice supported by a cell or a frequency, a frequency priority, a cell list allowed to be used, or a cell list not allowed to be used), a data status (whether data arrives, or whether an amount of the data is greater than or equal to a first threshold), whether the terminal device is allowed to transmit an indication of a UL WUS, the terminal device has obtained an SSB but has not obtained a SIB1, or a priority of an NES frequency. | |
| Optionally, the trigger condition of the UL WUS may be common, or may be configured per NES cell/frequency. | |
| For example, in a case that the NES cell meets a cell selection or reselection criterion, the terminal device considers that the UL WUS trigger condition is met, and/or the terminal device transmits a UL WUS request message. | |
| For another example, in a case that uplink data arrives at the terminal device, or a data amount of the uplink data is greater than or equal to a first threshold, the terminal device considers that the UL WUS trigger condition is met, and/or the terminal device transmits a UL WUS request message. | |
| For another example, the terminal device has obtained an SSB of the NES cell but has not obtained a SIB1, or the terminal device has obtained the SSB of the NES cell and SSB-based channel quality is greater than or equal to a second threshold (for example, RSRP, RSRQ, RSSI, or the like is greater than or equal to the second threshold) but the terminal device has not obtained the SIB1. In this case, the terminal device considers that the UL WUS trigger condition is met, and/or the terminal device transmits a UL WUS request message. | |
| For another example, channel quality of a currently camping cell of the terminal device is less than or equal to a third threshold, the terminal device has obtained an SSB of the NES cell, and SSB-based channel quality is greater than or equal to the second threshold (for example, RSRP, RSRQ, RSSI, or the like is greater than or equal to the second threshold), but the terminal device has not obtained a SIB1. In this case, the terminal device considers that the UL WUS trigger condition is met, and/or the terminal device transmits a UL WUS request message. | |
| For another example, a frequency priority corresponding to a currently camping cell of the terminal device is less than a frequency priority corresponding to the NES cell, and the terminal device has obtained an SSB of the NES cell and channel quality based on the SSB is greater than or equal to the second threshold (for example, RSRP, RSRQ, RSSI or the like is greater than or equal to the second threshold), but the terminal device has not obtained a SIB1. In this case, the terminal device considers that the UL WUS trigger condition is met, and/or the terminal device transmits a UL WUS request message. | |
| For another example, if a network allows the terminal device to transmit a UL WUS message, and the terminal device has obtained an SSB of the NES cell (further, SSB-based channel quality is greater than or equal to the second threshold (for example, RSRP, RSRQ, RSSI or the like is greater than or equal to the second threshold)), but the terminal device has not obtained a SIB1, the terminal device considers that the UL WUS trigger condition is met, and/or the terminal device transmits a UL WUS request message. | |
| For another example, a frequency priority corresponding to a camping cell of the terminal device is less than a frequency priority corresponding to the NES cell, and the terminal device has obtained an SSB of the NES cell and channel quality based on the SSB is greater than or equal to the second threshold (for example, RSRP, RSRQ, RSSI or the like is greater than or equal to the second threshold), but the terminal device has not obtained a SIB1. In this case, the terminal device considers that the UL WUS trigger condition is met, and/or the terminal device transmits a UL WUS request message. | |
| For another example, if a network allows the terminal device to transmit a UL WUS message, and the terminal device has obtained an SSB of the NES cell (further, SSB-based channel quality is greater than or equal to the second threshold (for example, RSRP, RSRQ, RSSI or the like is greater than or equal to the second threshold)), but the terminal device has not obtained a SIB1, the terminal device considers that the UL WUS trigger condition is met, and/or the terminal device transmits a UL WUS request message. | |
| For another example, if a base station indicates that the terminal device performs access in another cell (NES cell), or transmits an RACH, or transmits a UL WUS message, then the terminal device considers that the UL WUS trigger condition is met, and/or the terminal device transmits a UL WUS request message (further, may be used together with another condition). | |
| For example, a network instructs, by using a paging message, the terminal device to access a cell on which the terminal device is currently camping or another cell, or to transmit an RACH. | |
| For example, a network instructs, by using a paging message, the terminal device to transmit a UL WUS in another cell. | |
| NES cell status | Used by the terminal device to learn whether the NES cell transmits a SIB1 message; or whether the terminal device needs to transmit an on-demand (on-demand) message to request the SIB1. |
| The NES cell status includes, for example, one of the following: whether to save energy, whether to transmit a SIB1, or whether to be available. | |
| | Alternatively, the terminal device may learn a status of the NES cell depending on whether the SIB1 can be read from the NES cell. |
| Part or all of content (IE) of a SIB1 of the NES cell | Used to perform at least one of operations such as cell selection, reselection, or RACH. |

The information of the NES cell may be obtained through indication information of a base station, for example, may be indicated by a SIB message or a dedicated RRC message. If the information of the NES cell is indicated by using a SIB message, the information may be carried in an extension of an existing SIB message or a newly introduced SIBX message. Optionally, the terminal device obtains the information of the NES cell from a SIBX message transmitted by a previously camped cell, an anchor cell of the NES cell, or a previously accessed cell.

For another example, the information of the NES cell may be carried by using a dedicated RRC message (for example, an RRC release message). Optionally, the terminal device obtains the information of the NES cell by using a dedicated RRC message transmitted by a previously accessed cell.

The information of the NES cell may be used by the terminal device in an idle state/inactive state.

After receiving the information of the NES cell, the terminal device may determine information of an NES cell or a frequency, or determine whether an NES cell exists, or determine whether further information of the NES cell needs to be requested (for example, transmit an on-demand message (such as UL WUS) to request the NES cell to transmit a SIB1, refer to step S320 in FIG. 3).

Embodiment 1 provides a method for obtaining information of an NES cell, so that a terminal device can learn the information of the NES cell, and determine whether the NES cell exists and/or whether further information of the NES cell is requested, which helps the terminal device work in the NES cell.

### Embodiment 2 (Method for controlling a terminal device to access an NES cell)

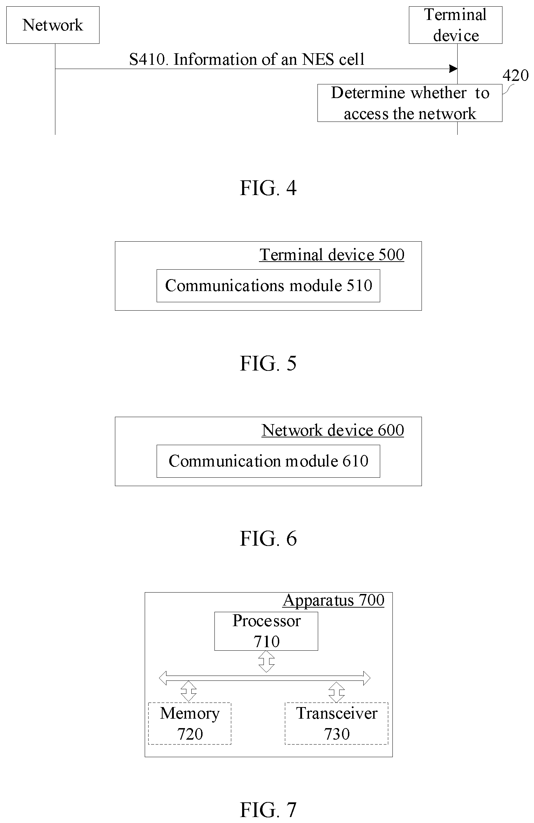

The terminal device receives information indicated by a network device, and the information is used to control the terminal device to access a network. The information includes an existing barring parameter, and/or first indication information (which may be a new access control parameter, such as a new barring parameter). In an example, information transmitted by the network device to the terminal device may be referred to as a barring indication (barring indication, refer to step S410 in FIG. 4).

After receiving the information indicated by the network device, the terminal device may access the network (refer to step S420 in FIG. 4).

Optionally, the network is an NES cell or a base station. The NES cell or the base station is one or more of the following: an SSB-less cell or base station, a cell using an NES technology (such as a cell using or supporting an adaptive SSB/RACH/paging technology), or a SIB1-less cell or base station.

An implementation of step S420 may include one or more of the implementations described in the following table.

| | | |
|---|---|---|
| | Whether the NES cell can be accessed, or the NES cell is camped on (or select the NES cell, or reselect the NES cell) | Specific implementation |
| Legacy (legacy) terminal device (or non-NES terminal device) Further, the terminal device is a terminal device in an idle state/inactive state. | In principle: No. Specifically : being controlled based on an existing barring parameter. | Option 1: If the terminal device cannot obtain a SIB1, the terminal device cannot camp on a cell, or select or reselect a cell. |
| | | Option 2: Access of the legacy terminal device is controlled based on an existing barring parameter, for example, cellbarred in a MIB and bar indication in a SIB1 (cellReservedForOperatorUse, or cellReservedForOtherUse, or cellReservedForFutureUse). |
| An NES terminal device (the NES terminal device includes one or more of the following: R19 terminal device, or a terminal device that supports an SSB-less cell/technolog y, a terminal device that supports a SIB1-less cell/technolog y, or a terminal device that supports an adaptive NES technology (such as an adaptive SSB/RACH/pa ging technology)). | In principle: Allowed. | Option 1: Whether an NES terminal device may be capable of accessing the cell is determined depending on whether the first indication information presents. |
| | Specifically : being control based on first indication information and/or an existing barring parameter. | Optionally, if the first indication information presents, the NES terminal device may access the cell. |
| | | Optionally, if the first indication information does not present, the NES terminal device is allowed to access the cell. The first indication information may indicate a cell type (for example, whether the cell is an NES cell). |
| | | Optionally, the first indication information is carried in an MIB, a SIB1, or another SIB. |
| | | Option 2: Whether an NES terminal device may be capable of accessing the cell is determined based on content of the first indication information. |
| | | Optionally, if it is indicated that cell access is allowed (or not barred), the NES terminal device may access the cell. |
| | | Optionally, if it is indicated that cell access is not allowed (or barred), the NES terminal device cannot access the cell. |
| | | Optionally, the NES terminal device ignores an existing barring parameter, such as callbarred. |
| | | Option 3: Whether an NES terminal device may access the cell is determined based on an existing barring parameter and content of the first indication information. |
| | | (1) Optionally, if an existing barring parameter such as cellbarred is barred, and the first indication information indicates that cell access is allowed (or not barred), the NES terminal device may access the cell. |
| | | (2) Optionally, if cellbarred is barred, and the first indication information indicates that cell access is not allowed (or barred), the NES terminal device cannot access the cell. |
| | | (3) Optionally, if cellbarred is not barred, the NES terminal device may access the cell. |
| | | (4) Optionally, if an existing barring parameter such as cellbarred is not barred, and the first indication information indicates that cell access is allowed (or not barred), the NES terminal device may access the cell. |
| | | (5) Optionally, if cellbarred is not barred, and the first indication information indicates that cell access is not allowed (or barred), the NES terminal device cannot access the cell. |
| | | Option 4: Whether an NES terminal device may access the cell is determined based on an existing barring parameter and depending on whether the first indication information presents. |
| | | (1) Optionally, if an existing barring parameter such as cellbarred is barred, and the first indication information presents, the NES terminal device may access the cell; otherwise, the NES terminal device cannot access the cell. |
| | | (2) Optionally, if cellbarred is barred, and the first indication information does not present, the NES terminal device may access the cell; otherwise, the NES terminal device cannot access the cell. |
| | | (3) Optionally, if cellbarred is not barred, the NES terminal device may access the cell. |
| | | (4) Optionally, if an existing barring parameter such as cellbarred is not barred, and the first indication information presents, the NES terminal device may access the cell; otherwise, the NES terminal device cannot access the cell. |
| | | (5) Optionally, if cellbarred is not barred, and the first indication information does not present, the NES terminal device may access the cell; otherwise, the NES terminal device cannot access the cell. |
| | | For options 1 to 4, optionally, the first indication information may use the following extension solution. |
| | | Extension solution 1: sub-information of the first indication information is introduced. Different pieces of sub-information indicate whether a network supports a specific NES technology, or different pieces of sub-information indicate whether a terminal device that uses or supports a specific NES technology may access a network. |
| | | Optionally, in a case that the first indication information indicates that cell access is allowed, or indicates that cell access is not allowed, or being present or being not present, the terminal device determines, based on sub-information, whether to access a network. |
| | | Alternatively, the first indication information is a plurality of pieces of second indication information, and different pieces of second indication information respectively indicate whether a network supports a specific NES technology, or different pieces of second indication information respectively indicate whether a terminal device that uses or supports a specific NES technology may access a network. |

The following provides some more specific implementations.

For example, if cellbarred indicates barred, the legacy terminal device cannot access the cell.

For another example, in a case that the NES terminal device ignores cellbarred, or the first indication information presents, the terminal device ignores cellbarred.

For another example, in a case that cellbarred indicates barred, and the first indication information presents or indicates that cell access is allowed, the NES terminal device may access the cell.

For another example, in a case that cellbarred indicates barred and the first indication information presents or indicates that cell access is not allowed, the NES terminal device may not access the cell.

For another example, in a case that the first indication information presents or indicates that cell access is not allowed, the NES terminal device may not access the cell.

For another example, in a case that the first indication information presents or indicates that cell access is allowed, the NES terminal device may access the cell.

For another example, in a case that the first indication information presents or indicates that cell access is not allowed, and sub-information for SIB1-less presents or indicates that cell access is allowed, the NES terminal device may access the SIB1-less cell.

For another example, in a case that the first indication information presents or indicates that cell access is not allowed, and sub-information for adaptive paging does not present or indicates that cell access is not allowed, the NES terminal device may access the cell that supports or uses the paging.

For another example, in a case that the first indication information presents or indicates that cell access is allowed, and sub-information for adaptive paging does not present or indicates that cell access is not allowed, the NES terminal device supports an NES or SIB1-less cell. In this case, the terminal device may access the cell.

For another example, in a case that the first indication information presents or indicates that cell access is allowed, and sub-information for adaptive paging does not present or indicates that cell access is not allowed, the NES terminal device supports the adaptive paging. In this case, the terminal device may not access the cell.

For another example, in a case that the second indication information for SIB1-less presents or indicates that cell access is allowed, the NES terminal device may access a SIB1-less cell.

For another example, in a case that the second indication information for adaptive paging does not present or indicates that cell access is not allowed, the NES terminal device may not access the cell that supports or uses the paging.

For another example, in a case that the second indication information for SIB1-less presents or indicates that cell access is allowed, an NES terminal device that supports the SIB1-less may access a SIB1-less cell.

For another example, in a case that the second indication information of adaptive paging does not present or indicates that cell access is not allowed, the NES terminal device that supports the adaptive paging may not access the cell that supports or uses the paging.

For another example, in a case that cellbarred indicates that cell access is allowed, and the second indication information for SIB1-less presents or indicates that cell access is allowed, the NES terminal device may access a SIB1-less cell.

For another example, in a case that cellbarred indicates that cell access is allowed, and when the second indication information for SIB1-less presents or indicates that cell access is allowed, the NES terminal device that supports the SIB1-less may access a SIB1-less cell.

In Embodiment 2, a terminal device may be controlled to access an NES cell, so that performance of a legacy terminal device is prevented from being affected, and load balancing may be implemented.

The method embodiments of this application are described above in detail with reference to FIG. 1 to FIG. 4. Apparatus embodiments of this application are described below in detail with reference to FIG. 5 to FIG. 7. It should be understood that the descriptions of the method embodiments correspond to descriptions of the apparatus embodiments, and therefore, for parts that are not described in detail, reference may be made to the foregoing method embodiments.

FIG. 5 is a schematic structural diagram of a terminal device according to an embodiment of this application. The terminal device 500 shown in FIG. 5 includes a communications module 510. The communications module 510 is configured to receive one or more of the following information transmitted by a network device: information of an NES cell; or indication information, used to control the terminal device to access the NES cell, or control access to the NES cell.

In some implementations, the information of the NES cell is used to indicate one or more of the following:
an association relationship between a first cell and the NES cell;
the NES cell associated with a first cell;
a frequency or an SSB frequency of the NES cell;
a cell identity or PCI of the NES cell;
QCL relationship information of the NES cell;
configuration information of a first message, where the first message is used by the terminal device to transmit a request message, or the first message is used to request the NES cell to transmit part or all of cell common information;
a first condition or a first factor, where the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a SIB1 of the NES cell; or
part or all of information in another SIB, different from the SIB1, of the NES cell.

In some implementations, the first message is an uplink request signal or a uplink wake-up signal.

In some implementations, the configuration information of the first message includes one or more of the following:
configuration information of a time domain resource of the first message;
configuration information of a frequency domain resource of the first message;
a preamble corresponding to the first message; or
beam direction information corresponding to the first message.

In some implementations, the configuration information of the first message is a common configuration information; or the configuration information of the first message is configuration information for a first cell; or the configuration information of the first message is information configured for each NES cell; or the configuration information of the first message is information configured for a frequency of each NES cell.

In some implementations, the cell common information includes a SIB1.

In some implementations, the first condition or first factor is associated with one or more of the following:
a cell selection or reselection parameter;
related information of data to be transmitted by the terminal device;
a barring parameter;
supported slice information;
first information transmitted by the network device, where the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

In some implementations, the first condition or first factor includes one or more of the following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

In some implementations, the state information of the NES cell is used to indicate one or more of the following:
whether the NES cell is in an energy saving state;
whether the NES cell transmits the SIB1; or
whether the NES cell is available.

In some implementations, the information of the NES cell is carried in a first SIB message. Alternatively, the information of the NES cell is carried in a dedicated RRC message.

In some implementations, the dedicated RRC message is an RRC release message.

In some implementations, the first SIB message is one of the following:
a new SIB message;
a SIB message obtained by extending an existing SIB message; or
an existing SIB message.

In some implementations, the information of the NES cell is obtained by using one or more of the following cells:
a first cell;
a cell on which the terminal device has previously camped;
an anchor cell of the NES cell;
a cell that the terminal device has previously accessed;
a cell on which the terminal device last camped; or
a cell that last serves the terminal device.

In some implementations, the information of the NES cell is information for the terminal device in an idle state or inactive state.

In some implementations, the terminal device camps on a first cell; or the terminal device camps on the NES cell.

In some implementations, the terminal device is a first terminal device, and the first terminal device camps on the NES cell in the following cases:
transmitting a first message; or
acquiring part or all of common information of the NES cell; or
the NES cell being not in an energy saving state.

In some implementations, a second terminal device cannot camp on the NES cell.

In some implementations, the indication information includes one or more of the following:
first indication information, used to control the terminal device to access the NES cell or control access of the NES cell; or
a barring parameter.

In some implementations, whether the terminal device is allowed to access the NES cell is determined based on one or more of the following:
whether a second message carries the first indication information;
indication content of the first indication information; or
indication content of the barring parameter.

In some implementations, if the second message carries the first indication information, the terminal device is allowed to access the NES cell; or if the second message does not carry the first indication information, the terminal device is allowed to access the NES cell.

In some implementations, if the first indication information indicates that cell access is allowed, the terminal device is allowed to access the NES cell; or if the first indication information indicates that cell access is not allowed, the terminal device is not allowed to access the NES cell.

In some implementations, the terminal device ignores the barring parameter.

In some implementations, if the barring parameter indicates that cell access is not allowed, and the first indication information indicates that cell access is allowed, then the terminal device is allowed to access the NES cell; or if the barring parameter indicates that cell access is not allowed, and the first indication information indicates that cell access is not allowed, the terminal device is not allowed to access the NES cell. If the barring parameter indicates that cell access is allowed, the terminal device is allowed to access the NES cell; or if the barring parameter indicates that cell access is allowed, and the first indication information indicates that cell access is allowed, the terminal device is allowed to access the NES cell; or if the barring parameter indicates that cell access is allowed, and the first indication information indicates that cell access is not allowed, the terminal device is not allowed to access the NES cell.

In some implementations, if the barring parameter indicates that cell access is not allowed, and the second message carries the first indication information, then the terminal device is allowed to access the NES cell; or if the barring parameter indicates that cell access is not allowed, and the second message does not carry the first indication information, then the terminal device is not allowed to access the NES cell; or if the barring parameter indicates that cell access is allowed, the terminal device is allowed to access the NES cell; or if the barring parameter indicates that cell access is allowed, and the second message carries the first indication information, then the terminal device is allowed to access the NES cell; or if the barring parameter indicates that cell access is allowed, and the second message does not carry the first indication information, then the terminal device is allowed to access the NES cell; or if the barring parameter indicates that cell access is allowed, and the second message does not carry the first indication information, then the terminal device is not allowed to access the NES cell.

In some implementations, the first indication information includes a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, where the first sub-information is one of the plurality of pieces of sub-information; or
whether a terminal device that supports an NES technology corresponding to the first sub-information is allowed to access a cell.

In some implementations, in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition includes one or more of the following:
the first indication information indicates that cell access is allowed;
the first indication information indicates that cell access is not allowed;
a second message carries the first indication information;
a second message does not carry the first indication information;
the first sub-information exists or presents in the first indication information;
the first sub-information indicates permission;
the barring parameter is ignored; or
the barring parameter indicates permission.

In some implementations, whether a terminal device that supports a specific NES technology is capable of accessing the NES cell is controlled or determined based on sub-information corresponding to the specific NES technology; or whether a specific terminal device is capable of accessing the NES cell is controlled or determined based on corresponding sub-information; or whether a specific terminal device is capable of accessing the NES cell is controlled or determined based on the first sub-information.

In some implementations, the first indication information includes a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, where the target information is one of the plurality of pieces of second indication information; or
whether a terminal device that supports an NES technology corresponding to the target information is allowed to access a cell.

In some implementations, in a case that a third condition is met, whether the terminal device is allowed to access the NES cell is determined based on at least part of the plurality of pieces of second indication information, or whether the terminal device is allowed to access the NES cell is determined based on at least part of the target information, and the third condition includes one or more of the following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

In some implementations, whether the terminal device that supports a specific NES technology is capable of accessing the NES cell is controlled or determined based on the second indication information corresponding to the specific NES technology; or whether a specific terminal device is capable of accessing the NES cell is controlled or determined based on corresponding second indication information; or whether the specific terminal device is capable of accessing the NES cell is controlled or determined based on the target information.

In some implementations, the first indication information is carried in a MIB or SIB.

In some implementations, the first indication information is carried in a SIB1.

In some implementations, the terminal device is a first terminal device, and the first terminal device includes one or more of the following:
a terminal device that supports NES;
a terminal device defined in 3GPP Release 19;
a terminal device that supports SSB-less;
a terminal device that supports SIB1-less; or
a terminal device that supports an adaptive NES technology.

In some implementations, the second terminal device meets one of the following:
the second terminal device is different from the first terminal device;
the second terminal device does not support NES; or
the second terminal device does not support a specific NES technology.

In some implementations, the terminal device is not allowed to access the NES cell in a first case, and the first case includes one or more of the following:
no SIB1 transmitted from the NES cell is received;
the barring parameter indicates a barring cell;
part of or no common information is received from the NES cell; or
the NES cell is in an energy saving state.

FIG. 6 is a schematic structural diagram of a network device according to an embodiment of this application. A network device 600 shown in FIG. 6 includes a communications module 610. The communications module 610 is configured to transmit one or more of the following information to a terminal device: information of an NES cell; or indication information, used to control the terminal device to access the NES cell, or control access to the NES cell.

In some implementations, the information of the NES cell is used to indicate one or more of the following:
an association relationship between a first cell and the NES cell;
the NES cell associated with a first cell;
a frequency or a synchronization signal block SSB frequency of the NES cell;
a cell identity or PCI of the NES cell;
QCL relationship information of the NES cell;
configuration information of a first message, where the first message is used by the terminal device to transmit a request message, or the first message is used to request the NES cell to transmit part or all of cell common information;
a first condition or a first factor, where the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a SIB1 of the NES cell; or
part or all of information in another SIB, different from the SIB1, of the NES cell.

In some implementations, the first message is an uplink request signal or a uplink wake-up signal.

In some implementations, the configuration information of the first message includes one or more of the following:
configuration information of a time domain resource of the first message;
configuration information of a frequency domain resource of the first message;
a preamble corresponding to the first message; or
beam direction information corresponding to the first message.

In some implementations, the configuration information of the first message is a common configuration information; or the configuration information of the first message is configuration information for a first cell; or the configuration information of the first message is information configured for each NES cell; or the configuration information of the first message is information configured for a frequency of each NES cell.

In some implementations, the cell common information includes a SIB1.

In some implementations, the first condition or first factor is associated with one or more of the following:
a cell selection or reselection parameter;
related information of data to be transmitted by the terminal device;
a barring parameter;
supported slice information;
first information transmitted by the network device, where the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

In some implementations, the first condition or first factor includes one or more of the following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

In some implementations, the state information of the NES cell is used to indicate one or more of the following:
whether the NES cell is in an energy saving state;
whether the NES cell transmits the SIB1; or
whether the NES cell is available.

In some implementations, the information of the NES cell is carried in a first SIB message. Alternatively, the information of the NES cell is carried in a dedicated RRC message.

In some implementations, the dedicated RRC message is an RRC release message.

In some implementations, the first SIB message is one of the following:
a new SIB message;
a SIB message obtained by extending an existing SIB message; or
an existing SIB message.

In some implementations, the information of the NES cell is obtained by using one or more of the following cells:
a first cell;
a cell on which the terminal device has previously camped;
an anchor cell of the NES cell;
a cell that the terminal device has previously accessed;
a cell on which the terminal device last camped; or
a cell that last serves the terminal device.

In some implementations, the information of the NES cell is information for the terminal device in an idle state or inactive state.

In some implementations, the terminal device camps on a first cell; or the terminal device camps on the NES cell.

In some implementations, the terminal device is a first terminal device, and the first terminal device camps on the NES cell in the following cases:
transmitting a first message; or
acquiring part or all of common information of the NES cell; or
the NES cell being not in an energy saving state.

In some implementations, a second terminal device cannot camp on the NES cell.

In some implementations, the indication information includes one or more of the following:
first indication information, used to control the terminal device to access the NES cell or control access of the NES cell; or
a barring parameter.

In some implementations, whether the terminal device is allowed to access the NES cell is determined based on one or more of the following:
whether a second message carries the first indication information;
indication content of the first indication information; or
indication content of the barring parameter.

In some implementations, if the second message carries the first indication information, the terminal device is allowed to access the NES cell; or if the second message does not carry the first indication information, the terminal device is allowed to access the NES cell.

In some implementations, if the first indication information indicates that cell access is allowed, the terminal device is allowed to access the NES cell; or if the first indication information indicates that cell access is not allowed, the terminal device is not allowed to access the NES cell.

In some implementations, the terminal device ignores the barring parameter.

In some implementations, if the barring parameter indicates that cell access is not allowed, and the first indication information indicates that cell access is allowed, then the terminal device is allowed to access the NES cell; or if the barring parameter indicates that cell access is not allowed, and the first indication information indicates that cell access is not allowed, then the terminal device is not allowed to access the NES cell; or if the barring parameter indicates that cell access is allowed, the terminal device is allowed to access the NES cell; or if the barring parameter indicates that cell access is allowed, and the first indication information indicates that cell access is allowed, then the terminal device is allowed to access the NES cell; or if the barring parameter indicates that cell access is allowed, and the first indication information indicates that cell access is not allowed, the terminal device is not allowed to access the NES cell.

In some implementations, if the barring parameter indicates that cell access is not allowed, and the second message carries the first indication information, then the terminal device is allowed to access the NES cell; or if the barring parameter indicates that cell access is not allowed, and the second message does not carry the first indication information, then the terminal device is not allowed to access the NES cell; or if the barring parameter indicates that cell access is allowed, the terminal device is allowed to access the NES cell; or if the barring parameter indicates that cell access is allowed, and the second message carries the first indication information, then the terminal device is allowed to access the NES cell; or if the barring parameter indicates that cell access is allowed, and the second message does not carry the first indication information, then the terminal device is allowed to access the NES cell; or if the barring parameter indicates that cell access is allowed, and the second message does not carry the first indication information, then the terminal device is not allowed to access the NES cell.

In some implementations, the first indication information includes a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, where the first sub-information is one of the plurality of pieces of sub-information; or
whether a terminal device that supports an NES technology corresponding to the first sub-information is allowed to access a cell.

In some implementations, in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition includes one or more of the following:
the first indication information indicates that cell access is allowed;
the first indication information indicates that cell access is not allowed;
a second message carries the first indication information;
a second message does not carry the first indication information;
the first sub-information exists or presents in the first indication information;
the first sub-information indicates permission;
the barring parameter is ignored; or
the barring parameter indicates permission.

In some implementations, whether a terminal device that supports a specific NES technology is capable of accessing the NES cell is controlled or determined based on sub-information corresponding to the specific NES technology; or whether a specific terminal device is capable of accessing the NES cell is controlled or determined based on corresponding sub-information; or whether a specific terminal device is capable of accessing the NES cell is controlled or determined based on the first sub-information.

In some implementations, the first indication information includes a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, where the target information is one of the plurality of pieces of second indication information; or
whether a terminal device that supports an NES technology corresponding to the target information is allowed to access a cell.

In some implementations, in a case that a third condition is met, whether the terminal device is allowed to access the NES cell is determined based on at least part of the plurality of pieces of second indication information, or whether the terminal device is allowed to access the NES cell is determined based on at least part of the target information, and the third condition includes one or more of the following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

In some implementations, whether the terminal device that supports a specific NES technology is capable of accessing the NES cell is controlled or determined based on the second indication information corresponding to the specific NES technology; or whether a specific terminal device is capable of accessing the NES cell is controlled or determined based on corresponding second indication information; or whether the specific terminal device is capable of accessing the NES cell is controlled or determined based on the target information.

In some implementations, the first indication information is carried in a MIB or SIB.

In some implementations, the first indication information is carried in a SIB1.

In some implementations, the terminal device is a first terminal device, and the first terminal device includes one or more of the following:
a terminal device that supports NES;
a terminal device defined in 3GPP Release 19;
a terminal device that supports SSB-less;
a terminal device that supports SIB1-less; or
a terminal device that supports an adaptive NES technology.

In some implementations, the second terminal device meets one of the following:
the second terminal device is different from the first terminal device;
the second terminal device does not support NES; or
the second terminal device does not support a specific NES technology.

In some implementations, the terminal device is not allowed to access the NES cell in a first case, and the first case includes one or more of the following:
no SIB1 transmitted from the NES cell is received;
the barring parameter indicates a barring cell;
part of or no common information is received from the NES cell; or
the NES cell is in an energy saving state.

FIG. 7 is a schematic diagram of a structure of a communications apparatus to which an embodiment of this application is applicable. Dashed lines in FIG. 7 indicate that a unit or module is optional. The apparatus 700 may be configured to implement the methods described in the foregoing method embodiments. The apparatus 700 may be a chip, a terminal device, or a network device.

The apparatus 700 may include one or more processors 710. The processor 710 may support the apparatus 700 in implementing the methods described in the foregoing method embodiments. The processor 710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 700 may further include one or more memories 720. The memory 720 stores a program, where the program may be executed by the processor 710, to cause the processor 710 to execute the methods described in the method embodiments. The memory 720 may be separated from or integrated into the processor 710.

The apparatus 700 may further include a transceiver 730. The processor 710 may communicate with another device or chip by using the transceiver 730. For example, the processor 710 may transmit data to and receive data from another device or chip through the transceiver 730.

An embodiment of this application further provides a computer-readable storage medium for storing a program. The computer-readable storage medium may be applied to the terminal device or the network device provided in embodiments of this application, and the program causes a computer to execute a method executed by the terminal device or the network device in embodiments of this application.

An embodiment of this application further provides a computer program product. The computer program product includes a program. The computer program product may be applied to the terminal device or the network device provided in the embodiments of this application, and the program causes a computer to execute the method performed by the terminal device or the network device in various embodiments of this application.

An embodiment of this application further provides a computer program. The computer program may be applied to the terminal device or the network device provided in the embodiments of this application, and the computer program causes a computer to execute the methods performed by the terminal device or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, one or more of following information transmitted by a network device:
information of a network energy saving NES cell; or
indication information, used to control the terminal device to access the NES cell, or control access to the NES cell.

2. The method according to claim 1, wherein the information of the NES cell is used to indicate one or more of following:
an association relationship between a first cell and the NES cell;
the NES cell associated with a first cell;
a frequency or a synchronization signal block SSB frequency of the NES cell;
a cell identity or physical cell identity PCI of the NES cell;
quasi-co-located QCL relationship information of the NES cell;
configuration information of a first message, wherein the first message is used by the terminal device to transmit a request message, or the first message is used to request the NES cell to transmit part or all of cell common information;
a first condition or a first factor, wherein the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a system information block SIB1 of the NES cell; or
part or all of information in another SIB, different from the SIB1, of the NES cell.

3. The method according to claim 2, wherein the first message is an uplink request signal or a uplink wake-up signal.

4. The method according to claim 2 or 3, wherein the configuration information of the first message comprises one or more of following:
configuration information of a time domain resource of the first message;
configuration information of a frequency domain resource of the first message;
a preamble corresponding to the first message; or
beam direction information corresponding to the first message.

5. The method according to any one of claims 2 to 4, wherein
the configuration information of the first message is common configuration information; or
the configuration information of the first message is configuration information for the first cell; or
the configuration information of the first message is information configured for each NES cell; or
the configuration information of the first message is information configured for a frequency of each NES cell.

6. The method according to any one of claims 2 to 5, wherein the cell common information comprises the SIB1.

7. The method according to any one of claims 2 to 6, wherein the first condition or the first factor is associated with one or more of following:
a cell selection or reselection parameter;
related information of data to be transmitted by the terminal device;
a barring parameter;
supported slice information;
first information transmitted by the network device, wherein the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

8. The method according to claim 7,wherein the first condition or the first factor comprises one or more of following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

9. The method according to any one of claims 2 to 8, wherein the state information of the NES cell is used to indicate one or more of following:
whether the NES cell is in an energy saving state;
whether the NES cell transmits the SIB1; or
whether the NES cell is available.

10. The method according to any one of claims 1 to 9, wherein
the information of the NES cell is carried in a first SIB message; or
the information of the NES cell is carried in a dedicated radio resource control RRC message.

11. The method according to claim 10, wherein the dedicated RRC message is an RRC release message.

12. The method according to claim 10, wherein the first SIB message is one of following:
a new SIB message;
a SIB message obtained by extending an existing SIB message; or
an existing SIB message.

13. The method according to any one of claims 1 to 12, wherein the information of the NES cell is obtained by using one or more of following cells:
a first cell;
a cell on which the terminal device has previously camped;
an anchor cell of the NES cell;
a cell that the terminal device has previously accessed;
a cell on which the terminal device last camped; or
a cell that last serves the terminal device.

14. The method according to any one of claims 1 to 13, wherein the information of the NES cell is information about a terminal device in an idle state or an inactive terminal device.

15. The method according to any one of claims 1 to 14, wherein the terminal device camps on a first cell; or the terminal device camps on the NES cell.

16. The method according to claim 15, wherein the terminal device is a first terminal device, and the first terminal device camps on the NES cell in following cases:
transmitting a first message; or
acquiring part or all of common information of the NES cell; or
the NES cell being not in an energy saving state.

17. The method according to any one of claims 1 to 16, wherein a second terminal device fails to camp on the NES cell.

18. The method according to any one of claims 1 to 17, wherein the indication information comprises one or more of following:
first indication information, used to control the terminal device to access the NES cell or control access of the NES cell; or
a barring parameter.

19. The method according to claim 18, wherein whether the terminal device is allowed to access to the NES cell is determined based on one or more of following:
whether a second message carries the first indication information;
indication content of the first indication information; or
indication content of the barring parameter.

20. The method according to claim 19, wherein
in a case that the second message carries the first indication information, the terminal device is allowed to access the NES cell; or
in a case that the second message does not carry the first indication information, the terminal device is allowed to access the NES cell.

21. The method according to claim 19, wherein
in a case that the first indication information indicates that cell access is allowed, the terminal device is allowed to access the NES cell; or
in a case that the first indication information indicates that cell access is not allowed, the terminal device is not allowed to access the NES cell.

22. The method according to claim 20 or 21, wherein the terminal device ignores the barring parameter.

23. The method according to claim 19, wherein
in a case that the barring parameter indicates that cell access is not allowed, and the first indication information indicates that cell access is allowed, the terminal device is allowed to access the NES cell; or
in a case that the barring parameter indicates that cell access is not allowed, and the first indication information indicates that cell access is not allowed, the terminal device is not allowed to access the NES cell; or
in a case that the barring parameter indicates that cell access is allowed, the terminal device is allowed to access the NES cell; or
in a case that the barring parameter indicates that cell access is allowed, and the first indication information indicates that cell access is allowed, the terminal device is allowed to access the NES cell; or
in a case that the barring parameter indicates that cell access is allowed, and the first indication information indicates that cell access is not allowed, the terminal device is not allowed to access the NES cell.

24. The method according to claim 19, wherein
in a case that the barring parameter indicates that cell access is not allowed, and the second message carries the first indication information, the terminal device is allowed to access the NES cell; or
in a case that the barring parameter indicates that cell access is not allowed, and the second message does not carry the first indication information, the terminal device is not allowed to access the NES cell; or
in a case that the barring parameter indicates that cell access is allowed, the terminal device is allowed to access the NES cell; or
in a case that the barring parameter indicates that cell access is allowed, and the second message carries the first indication information, the terminal device is allowed to access the NES cell; or
in a case that the barring parameter indicates that cell access is allowed, and the second message does not carry the first indication information, the terminal device is allowed to access the NES cell; or
in a case that the barring parameter indicates that cell access is allowed, and the second message does not carry the first indication information, the terminal device is not allowed to access the NES cell.

25. The method according to claim 18 or 19, wherein the first indication information comprises a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, wherein the first sub-information is one of the plurality of pieces of sub-information; or
whether a terminal device that supports an NES technology corresponding to the first sub-information is allowed to access a cell.

26. The method according to claim 25, wherein in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition comprises one or more of following:
the first indication information indicates that cell access is allowed;
the first indication information indicates that cell access is not allowed;
the second message carries the first indication information;
the second message does not carry the first indication information;
the first sub-information exists or presents in the first indication information;
the first sub-information indicates permission;
the barring parameter is ignored; or
the barring parameter indicates permission.

27. The method according to claim 25 or 26, wherein
whether a terminal device that supports a specific NES technology is capable of accessing the NES cell is controlled or determined based on sub-information corresponding to the specific NES technology; or
whether a specific terminal device is capable of accessing the NES cell is controlled or determined based on corresponding sub-information; or
whether a specific terminal device is capable of accessing the NES cell is controlled or determined based on the first sub-information.

28. The method according to claim 18 or 19, wherein the first indication information comprises a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, wherein the target information is one of the plurality of pieces of second indication information; or
whether a terminal device that supports an NES technology corresponding to the target information is allowed to access a cell.

29. The method according to claim 28, wherein in a case that a third condition is met, whether the terminal device is allowed to access the NES cell is determined based on at least part of the plurality of pieces of second indication information, or whether the terminal device is allowed to access the NES cell is determined based on at least part of the target information, and the third condition comprises one or more of following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

30. The method according to claim 28 or 29, wherein
whether a terminal device that supports a specific NES technology is capable of accessing the NES cell is controlled or determined based on second indication information corresponding to the specific NES technology; or
whether a specific terminal device is capable of accessing the NES cell is controlled or determined based on corresponding second indication information; or
whether a specific terminal device is capable of accessing the NES cell is controlled or determined based on the target information.

31. The method according to any one of claims 18 to 30, wherein the first indication information is carried in a master information block MIB or a SIB.

32. The method according to claim 31, wherein the first indication information is carried in a SIB1.

33. The method according to claims 18 to 32, wherein the terminal device is a first terminal device, and the first terminal device comprises one or more of following:
a terminal device that supports NES;
a terminal device defined in 3rd Generation Partnership Project 3GPP Release 19;
a terminal device that supports SSB-less;
a terminal device that supports SIB1-less; or
a terminal device that supports an adaptive NES technology.

34. The method according to claim 17, wherein the second terminal device meets one of following:
the second terminal device is different from the first terminal device;
the second terminal device does not support NES; or
the second terminal device does not support a specific NES technology.

35. The method according to claim 18 or 21, wherein the terminal device is not allowed to access the NES cell in a first case, and the first case comprises one or more of following:
no SIB1 transmitted from the NES cell is received;
the barring parameter indicates a barring cell;
part of or no common information is received from the NES cell; or
the NES cell is in an energy saving state.

36. A wireless communication method, comprising:
transmitting, by a network device, one or more of following information to a terminal device:
information of a network energy saving NES cell; or
indication information, used to control the terminal device to access the NES cell, or control access to the NES cell.

37. The method according to claim 36, wherein the information of the NES cell is used to indicate one or more of following:
an association relationship between a first cell and the NES cell;
the NES cell associated with a first cell;
a frequency or a synchronization signal block SSB frequency of the NES cell;
a cell identity or physical cell identity PCI of the NES cell;
quasi-co-located QCL relationship information of the NES cell;
configuration information of a first message, wherein the first message is used by the terminal device to transmit a request message, or the first message is used to request the NES cell to transmit part or all of cell common information;
a first condition or a first factor, wherein the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a system information block SIB1 of the NES cell; or
part or all of information in another SIB, different from the SIB1, of the NES cell.

38. The method according to claim 37, wherein the first message is an uplink request signal or a uplink wake-up signal.

39. The method according to claim 37 or 38, wherein the configuration information of the first message comprises one or more of following:
configuration information of a time domain resource of the first message;
configuration information of a frequency domain resource of the first message;
a preamble corresponding to the first message; or
beam direction information corresponding to the first message.

40. The method according to any one of claims 37 to 39, wherein
the configuration information of the first message is common configuration information; or
the configuration information of the first message is configuration information for the first cell; or
the configuration information of the first message is information configured for each NES cell; or
the configuration information of the first message is information configured for a frequency of each NES cell.

41. The method according to any one of claims 37 to 40, wherein the cell common information comprises the SIB1.

42. The method according to any one of claims 37 to 41, wherein the first condition or the first factor is associated with one or more of following:
a cell selection or reselection parameter;
related information of data to be transmitted by the terminal device;
a barring parameter;
supported slice information;
first information transmitted by the network device, wherein the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

43. The method according to claim 42,wherein the first condition or the first factor comprises one or more of following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

44. The method according to any one of claims 37 to 43, wherein the state information of the NES cell is used to indicate one or more of following:
whether the NES cell is in an energy saving state;
whether the NES cell transmits the SIB1; or
whether the NES cell is available.

45. The method according to any one of claims 36 to 44, wherein
the information of the NES cell is carried in a first SIB message; or
the information of the NES cell is carried in a dedicated radio resource control RRC message.

46. The method according to claim 45, wherein the dedicated RRC message is an RRC release message.

47. The method according to claim 45, wherein the first SIB message is one of following:
a new SIB message;
a SIB message obtained by extending an existing SIB message; or
an existing SIB message.

48. The method according to any one of claims 36 to 47, wherein the information of the NES cell is obtained by using one or more of following cells:
a first cell;
a cell on which the terminal device has previously camped;
an anchor cell of the NES cell;
a cell that the terminal device has previously accessed;
a cell on which the terminal device last camped; or
a cell that last serves the terminal device.

49. The method according to any one of claims 36 to 48, wherein the information of the NES cell is information about a terminal device in an idle state or an inactive terminal device.

50. The method according to any one of claims 36 to 49, wherein the terminal device camps on a first cell; or the terminal device camps on the NES cell.

51. The method according to claim 50, wherein the terminal device is a first terminal device, and the first terminal device camps on the NES cell in following cases:
transmitting a first message; or
acquiring part or all of common information of the NES cell; or
the NES cell being not in an energy saving state.

52. The method according to any one of claims 36 to 51, wherein a second terminal device fails to camp on the NES cell.

53. The method according to any one of claims 36 to 52, wherein the indication information comprises one or more of following:
first indication information, used to control the terminal device to access the NES cell or control access of the NES cell; or
a barring parameter.

54. The method according to claim 53, wherein whether the terminal device is allowed to access to the NES cell is determined based on one or more of following:
whether a second message carries the first indication information;
indication content of the first indication information; or
indication content of the barring parameter.

55. The method according to claim 54, wherein
in a case that the second message carries the first indication information, the terminal device is allowed to access the NES cell; or
in a case that the second message does not carry the first indication information, the terminal device is allowed to access the NES cell.

56. The method according to claim 54, wherein
in a case that the first indication information indicates that cell access is allowed, the terminal device is allowed to access the NES cell; or
in a case that the first indication information indicates that cell access is not allowed, the terminal device is not allowed to access the NES cell.

57. The method according to claim 55 or 56, wherein the terminal device ignores the barring parameter.

58. The method according to claim 54, wherein
in a case that the barring parameter indicates that cell access is not allowed, and the first indication information indicates that cell access is allowed, the terminal device is allowed to access the NES cell; or
in a case that the barring parameter indicates that cell access is not allowed, and the first indication information indicates that cell access is not allowed, the terminal device is not allowed to access the NES cell; or
in a case that the barring parameter indicates that cell access is allowed, the terminal device is allowed to access the NES cell; or
in a case that the barring parameter indicates that cell access is allowed, and the first indication information indicates that cell access is allowed, the terminal device is allowed to access the NES cell; or
in a case that the barring parameter indicates that cell access is allowed, and the first indication information indicates that cell access is not allowed, the terminal device is not allowed to access the NES cell.

59. The method according to claim 54, wherein
in a case that the barring parameter indicates that cell access is not allowed, and the second message carries the first indication information, the terminal device is allowed to access the NES cell; or
in a case that the barring parameter indicates that cell access is not allowed, and the second message does not carry the first indication information, the terminal device is not allowed to access the NES cell; or
in a case that the barring parameter indicates that cell access is allowed, the terminal device is allowed to access the NES cell; or
in a case that the barring parameter indicates that cell access is allowed, and the second message carries the first indication information, the terminal device is allowed to access the NES cell; or
in a case that the barring parameter indicates that cell access is allowed, and the second message does not carry the first indication information, the terminal device is allowed to access the NES cell; or
in a case that the barring parameter indicates that cell access is allowed, and the second message does not carry the first indication information, the terminal device is not allowed to access the NES cell.

60. The method according to claim 53 or 54, wherein the first indication information comprises a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, wherein the first sub-information is one of the plurality of pieces of sub-information; or
whether a terminal device that supports an NES technology corresponding to the first sub-information is allowed to access a cell.

61. The method according to claim 60, wherein in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition comprises one or more of following:
the first indication information indicates that cell access is allowed;
the first indication information indicates that cell access is not allowed;
a second message carries the first indication information;
a second message does not carry the first indication information;
the first sub-information exists or presents in the first indication information;
the first sub-information indicates permission;
the barring parameter is ignored; or
the barring parameter indicates permission.

62. The method according to claim 60 or 61, wherein
whether a terminal device that supports a specific NES technology is capable of accessing the NES cell is controlled or determined based on sub-information corresponding to the specific NES technology; or
whether a specific terminal device is capable of accessing the NES cell is controlled or determined based on corresponding sub-information; or
whether a specific terminal device is capable of accessing the NES cell is controlled or determined based on the first sub-information.

63. The method according to claim 53 or 54, wherein the first indication information comprises a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, wherein the target information is one of the plurality of pieces of second indication information; or
whether a terminal device that supports an NES technology corresponding to the target information is allowed to access a cell.

64. The method according to claim 63, wherein in a case that a third condition is met, whether the terminal device is allowed to access the NES cell is determined based on at least part of the plurality of pieces of second indication information, or whether the terminal device is allowed to access the NES cell is determined based on at least part of the target information, and the third condition comprises one or more of following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

65. The method according to claim 63 or 64, wherein
whether a terminal device that supports a specific NES technology is capable of accessing the NES cell is controlled or determined based on second indication information corresponding to the specific NES technology; or
whether a specific terminal device is capable of accessing the NES cell is controlled or determined based on corresponding second indication information; or
whether a specific terminal device is capable of accessing the NES cell is controlled or determined based on the target information.

66. The method according to any one of claims 53 to 65, wherein the first indication information is carried in a master information block MIB or a SIB.

67. The method according to claim 66, wherein the first indication information is carried in a SIB1.

68. The method according to claims 53 to 67, wherein the terminal device is a first terminal device, and the first terminal device comprises one or more of following:
a terminal device that supports NES;
a terminal device defined in 3rd Generation Partnership Project 3GPP Release 19;
a terminal device that supports SSB-less;
a terminal device that supports SIB1-less; or
a terminal device that supports an adaptive NES technology.

69. The method according to claim 52, wherein the second terminal device meets one of following:
the second terminal device is different from the first terminal device;
the second terminal device does not support NES; or
the second terminal device does not support a specific NES technology.

70. The method according to claim 53 or 56, wherein the terminal device is not allowed to access the NES cell in a first case, and the first case comprises one or more of following:
no SIB1 transmitted from the NES cell is received;
the barring parameter indicates a barring cell;
part of or no common information is received from the NES cell; or
the NES cell is in an energy saving state.

71. A terminal device, comprising:
a communications module, configured to receive one or more of following information transmitted by a network device:
information of a network energy saving NES cell; or
indication information, used to control the terminal device to access the NES cell, or control access to the NES cell.

72. The terminal device according to claim 71, wherein the information of the NES cell is used to indicate one or more of following:
an association relationship between a first cell and the NES cell;
the NES cell associated with a first cell;
a frequency or a synchronization signal block SSB frequency of the NES cell;
a cell identity or physical cell identity PCI of the NES cell;
quasi-co-located QCL relationship information of the NES cell;
configuration information of a first message, wherein the first message is used by the terminal device to transmit a request message, or the first message is used to request the NES cell to transmit part or all of cell common information;
a first condition or a first factor, wherein the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a system information block SIB1 of the NES cell; or
part or all of information in another SIB, different from the SIB1, of the NES cell.

73. The terminal device according to claim 72, wherein the first message is an uplink request signal or a uplink wake-up signal.

74. The terminal device according to claim 72 or 73, wherein the configuration information of the first message comprises one or more of following:
configuration information of a time domain resource of the first message;
configuration information of a frequency domain resource of the first message;
a preamble corresponding to the first message; or
beam direction information corresponding to the first message.

75. The terminal device according to any one of claims 72 to 74, wherein
the configuration information of the first message is common configuration information; or
the configuration information of the first message is configuration information for the first cell; or
the configuration information of the first message is information configured for each NES cell; or
the configuration information of the first message is information configured for a frequency of each NES cell.

76. The terminal device according to any one of claims 72 to 75, wherein the cell common information comprises a SIB1.

77. The terminal device according to any one of claims 72 to 76, wherein the first condition or the first factor is associated with one or more of following:
a cell selection or reselection parameter;
related information of data to be transmitted by the terminal device;
a barring parameter;
supported slice information;
first information transmitted by the network device, wherein the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

78. The terminal device according to claim 77,wherein the first condition or the first factor comprises one or more of following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

79. The terminal device according to any one of claims 72 to 78, wherein the state information of the NES cell is used to indicate one or more of following:
whether the NES cell is in an energy saving state;
whether the NES cell transmits the SIB1; or
whether the NES cell is available.

80. The terminal device according to any one of claims 71 to 79, wherein
the information of the NES cell is carried in a first SIB message; or
the information of the NES cell is carried in a dedicated radio resource control RRC message.

81. The terminal device according to claim 80, wherein the dedicated RRC message is an RRC release message.

82. The terminal device according to claim 80, wherein the first SIB message is one of following:
a new SIB message;
a SIB message obtained by extending an existing SIB message; or
an existing SIB message.

83. The terminal device according to any one of claims 71 to 82, wherein the information of the NES cell is obtained by using one or more of following cells:
a first cell;
a cell on which the terminal device has previously camped;
an anchor cell of the NES cell;
a cell that the terminal device has previously accessed;
a cell on which the terminal device last camped; or
a cell that last serves the terminal device.

84. The terminal device according to any one of claims 71 to 83, wherein the information of the NES cell is information about a terminal device in an idle state or an inactive terminal device.

85. The terminal device according to any one of claims 71 to 84, wherein the terminal device camps on a first cell; or the terminal device camps on the NES cell.

86. The terminal device according to claim 85, wherein the terminal device is a first terminal device, and the first terminal device camps on the NES cell in following cases:
transmitting a first message; or
acquiring part or all of common information of the NES cell; or
the NES cell being not in an energy saving state.

87. The terminal device according to any one of claims 71 to 86, wherein a second terminal device fails to camp on the NES cell.

88. The terminal device according to any one of claims 71 to 87, wherein the indication information comprises one or more of following:
first indication information, used to control the terminal device to access the NES cell or control access of the NES cell; or
a barring parameter.

89. The terminal device according to claim 88, wherein whether the terminal device is allowed to access to the NES cell is determined based on one or more of following:
whether a second message carries the first indication information;
indication content of the first indication information; or
indication content of the barring parameter.

90. The terminal device according to claim 89, wherein
in a case that the second message carries the first indication information, the terminal device is allowed to access the NES cell; or
in a case that the second message does not carry the first indication information, the terminal device is allowed to access the NES cell.

91. The terminal device according to claim 89, wherein
in a case that the first indication information indicates that cell access is allowed, the terminal device is allowed to access the NES cell; or
in a case that the first indication information indicates that cell access is not allowed, the terminal device is not allowed to access the NES cell.

92. The terminal device according to claim 90 or 91, wherein the terminal device ignores the barring parameter.

93. The terminal device according to claim 89, wherein
in a case that the barring parameter indicates that cell access is not allowed, and the first indication information indicates that cell access is allowed, the terminal device is allowed to access the NES cell; or
in a case that the barring parameter indicates that cell access is not allowed, and the first indication information indicates that cell access is not allowed, the terminal device is not allowed to access the NES cell; or
in a case that the barring parameter indicates that cell access is allowed, the terminal device is allowed to access the NES cell; or
in a case that the barring parameter indicates that cell access is allowed, and the first indication information indicates that cell access is allowed, the terminal device is allowed to access the NES cell; or
in a case that the barring parameter indicates that cell access is allowed, and the first indication information indicates that cell access is not allowed, the terminal device is not allowed to access the NES cell.

94. The terminal device according to claim 89, wherein
in a case that the barring parameter indicates that cell access is not allowed, and the second message carries the first indication information, the terminal device is allowed to access the NES cell; or
in a case that the barring parameter indicates that cell access is not allowed, and the second message does not carry the first indication information, the terminal device is not allowed to access the NES cell; or
in a case that the barring parameter indicates that cell access is allowed, the terminal device is allowed to access the NES cell; or
in a case that the barring parameter indicates that cell access is allowed, and the second message carries the first indication information, the terminal device is allowed to access the NES cell; or
in a case that the barring parameter indicates that cell access is allowed, and the second message does not carry the first indication information, the terminal device is allowed to access the NES cell; or
in a case that the barring parameter indicates that cell access is allowed, and the second message does not carry the first indication information, the terminal device is not allowed to access the NES cell.

95. The terminal device according to claim 88 or 89, wherein the first indication information comprises a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, wherein the first sub-information is one of the plurality of pieces of sub-information; or
whether a terminal device that supports an NES technology corresponding to the first sub-information is allowed to access a cell.

96. The terminal device according to claim 95, wherein in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition comprises one or more of following:
the first indication information indicates that cell access is allowed;
the first indication information indicates that cell access is not allowed;
a second message carries the first indication information;
a second message does not carry the first indication information;
the first sub-information exists or presents in the first indication information;
the first sub-information indicates permission;
the barring parameter is ignored; or
the barring parameter indicates permission.

97. The terminal device according to claim 95 or 96, wherein
whether a terminal device that supports a specific NES technology is capable of accessing the NES cell is controlled or determined based on sub-information corresponding to the specific NES technology; or
whether a specific terminal device is capable of accessing the NES cell is controlled or determined based on corresponding sub-information; or
whether a specific terminal device is capable of accessing the NES cell is controlled or determined based on the first sub-information.

98. The terminal device according to claim 88 or 89, wherein the first indication information comprises a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, wherein the target information is one of the plurality of pieces of second indication information; or
whether a terminal device that supports an NES technology corresponding to the target information is allowed to access a cell.

99. The terminal device according to claim 98, wherein in a case that a third condition is met, whether the terminal device is allowed to access the NES cell is determined based on at least part of the plurality of pieces of second indication information, or whether the terminal device is allowed to access the NES cell is determined based on at least part of the target information, and the third condition comprises one or more of following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

100. The terminal device according to claim 98 or 99, wherein
whether a terminal device that supports a specific NES technology is capable of accessing the NES cell is controlled or determined based on second indication information corresponding to the specific NES technology; or
whether a specific terminal device is capable of accessing the NES cell is controlled or determined based on corresponding second indication information; or
whether a specific terminal device is capable of accessing the NES cell is controlled or determined based on the target information.

101. The terminal device according to any one of claims 88 to 100, wherein the first indication information is carried in a master information block MIB or a SIB.

102. The terminal device according to claim 101, wherein the first indication information is carried in a SIB1.

103. The terminal device according to claims 88 to 102, wherein the terminal device is a first terminal device, and the first terminal device comprises one or more of following:
a terminal device that supports NES;
a terminal device defined in 3rd Generation Partnership Project 3GPP Release 19;
a terminal device that supports SSB-less;
a terminal device that supports SIB1-less; or
a terminal device that supports an adaptive NES technology.

104. The terminal device according to claim 87, wherein the second terminal device meets one of following:
the second terminal device is different from the first terminal device;
the second terminal device does not support NES; or
the second terminal device does not support a specific NES technology.

105. The terminal device according to claim 88 or 91, wherein the terminal device is not allowed to access the NES cell in a first case, and the first case comprises one or more of following:
no SIB1 transmitted from the NES cell is received;
the barring parameter indicates a barring cell;
part of or no common information is received from the NES cell; or
the NES cell is in an energy saving state.

106. A network device, comprising:
a communications module, configured to transmit one or more of following information to a terminal device:
information of a network energy saving NES cell; or
indication information, used to control the terminal device to access the NES cell, or control access to the NES cell.

107. The network device according to claim 106, wherein the information of the NES cell is used to indicate one or more of following:
an association relationship between a first cell and the NES cell;
the NES cell associated with a first cell;
a frequency or a synchronization signal block SSB frequency of the NES cell;
a cell identity or physical cell identity PCI of the NES cell;
quasi-co-located QCL relationship information of the NES cell;
configuration information of a first message, wherein the first message is used by the terminal device to transmit a request message, or the first message is used to request the NES cell to transmit part or all of cell common information;
a first condition or a first factor, wherein the first condition or the first factor is used to trigger the terminal device to determine whether to transmit a first message, or the first condition or the first factor is used to determine whether a condition for transmitting the first message is met, or the first condition or the first factor is used to trigger transmission of the first message;
state information of the NES cell;
part or all of information in a system information block SIB1 of the NES cell; or
part or all of information in another SIB, different from the SIB1, of the NES cell.

108. The network device according to claim 107, wherein the first message is an uplink request signal or a uplink wake-up signal.

109. The network device according to claim 107 or 108, wherein the configuration information of the first message comprises one or more of following:
configuration information of a time domain resource of the first message;
configuration information of a frequency domain resource of the first message;
a preamble corresponding to the first message; or
beam direction information corresponding to the first message.

110. The network device according to any one of claims 107 to 109, wherein
the configuration information of the first message is common configuration information; or
the configuration information of the first message is configuration information for the first cell; or
the configuration information of the first message is information configured for each NES cell; or
the configuration information of the first message is information configured for a frequency of each NES cell.

111. The network device according to any one of claims 107 to 110, wherein the cell common information comprises a SIB1.

112. The network device according to any one of claims 107 to 111, wherein the first condition or the first factor is associated with one or more of following:
a cell selection or reselection parameter;
related information of data to be transmitted by the terminal device;
a barring parameter;
supported slice information;
first information transmitted by the network device, wherein the first information is used to indicate whether the terminal device is allowed to transmit the first message;
whether the terminal device has received an SSB of the NES cell;
whether the terminal device has received the SIB1 of the NES cell;
signal quality of an SSB received by the terminal device;
signal quality of the first cell;
a difference between signal quality of the first cell and signal quality of the NES cell;
a frequency priority corresponding to the first cell; or
a frequency priority corresponding to the NES cell.

113. The network device according to claim 112,wherein the first condition or the first factor comprises one or more of following:
the NES cell meets a cell selection or reselection criterion;
uplink data arrives at the terminal device;
a data amount of uplink data to be transmitted by the terminal device is greater than or equal to a first threshold;
the NES cell is not barred or prevented from accessing;
the NES cell supports a slice required by the terminal device;
the terminal device has received the SSB of the NES cell but has not received the SIB1;
the terminal device detects the NES cell but has not received the SIB1;
signal quality of the SSB is greater than or equal to a second threshold;
signal quality of the NES cell is greater than or equal to a third threshold;
signal quality of a current cell of the terminal device is less than or equal to a fourth threshold;
a frequency priority corresponding to a current cell of the terminal device is less than a frequency priority corresponding to the NES cell;
a current cell of the terminal device does not support a slice required by the terminal device;
signal quality of the first cell is less than or equal to a fifth threshold;
a frequency priority corresponding to the first cell is less than a frequency priority corresponding to the NES cell;
the first cell does not support a slice required by the terminal device; or
the first information indicates that the network device allows the terminal device to transmit the first message.

114. The network device according to any one of claims 107 to 113, wherein the state information of the NES cell is used to indicate one or more of following:
whether the NES cell is in an energy saving state;
whether the NES cell transmits the SIB1; or
whether the NES cell is available.

115. The network device according to any one of claims 106 to 114, wherein
the information of the NES cell is carried in a first SIB message; or
the information of the NES cell is carried in a dedicated radio resource control RRC message.

116. The network device according to claim 115, wherein the dedicated RRC message is an RRC release message.

117. The network device according to claim 115, wherein the first SIB message is one of following:
a new SIB message;
a SIB message obtained by extending an existing SIB message; or
an existing SIB message.

118. The network device according to any one of claims 106 to 117, wherein the information of the NES cell is obtained by using one or more of following cells:
a first cell;
a cell on which the terminal device has previously camped;
an anchor cell of the NES cell;
a cell that the terminal device has previously accessed;
a cell on which the terminal device last camped; or
a cell that last serves the terminal device.

119. The network device according to any one of claims 106 to 118, wherein the information of the NES cell is information about a terminal device in an idle state or an inactive terminal device.

120. The network device according to any one of claims 106 to 119, wherein the terminal device camps on a first cell; or the terminal device camps on the NES cell.

121. The network device according to claim 120, wherein the terminal device is a first terminal device, and the first terminal device camps on the NES cell in following cases:
transmitting a first message; or
acquiring part or all of common information of the NES cell; or
the NES cell being not in an energy saving state.

122. The network device according to any one of claims 106 to 121, wherein a second terminal device fails to camp on the NES cell.

123. The network device according to any one of claims 106 to 122, wherein the indication information comprises one or more of following:
first indication information, used to control the terminal device to access the NES cell or control access of the NES cell; or
a barring parameter.

124. The network device according to claim 123, wherein whether the terminal device is allowed to access to the NES cell is determined based on one or more of following:
whether a second message carries the first indication information;
indication content of the first indication information; or
indication content of the barring parameter.

125. The network device according to claim 124, wherein
in a case that the second message carries the first indication information, the terminal device is allowed to access the NES cell; or
in a case that the second message does not carry the first indication information, the terminal device is allowed to access the NES cell.

126. The network device according to claim 124, wherein
in a case that the first indication information indicates that cell access is allowed, the terminal device is allowed to access the NES cell; or
in a case that the first indication information indicates that cell access is not allowed, the terminal device is not allowed to access the NES cell.

127. The network device according to claim 125 or 126, wherein the terminal device ignores the barring parameter.

128. The network device according to claim 124, wherein
in a case that the barring parameter indicates that cell access is not allowed, and the first indication information indicates that cell access is allowed, the terminal device is allowed to access the NES cell; or
in a case that the barring parameter indicates that cell access is not allowed, and the first indication information indicates that cell access is not allowed, the terminal device is not allowed to access the NES cell; or
in a case that the barring parameter indicates that cell access is allowed, the terminal device is allowed to access the NES cell; or
in a case that the barring parameter indicates that cell access is allowed, and the first indication information indicates that cell access is allowed, the terminal device is allowed to access the NES cell; or
in a case that the barring parameter indicates that cell access is allowed, and the first indication information indicates that cell access is not allowed, the terminal device is not allowed to access the NES cell.

129. The network device according to claim 124, wherein
in a case that the barring parameter indicates that cell access is not allowed, and the second message carries the first indication information, the terminal device is allowed to access the NES cell; or
in a case that the barring parameter indicates that cell access is not allowed, and the second message does not carry the first indication information, the terminal device is not allowed to access the NES cell; or
in a case that the barring parameter indicates that cell access is allowed, the terminal device is allowed to access the NES cell; or
in a case that the barring parameter indicates that cell access is allowed, and the second message carries the first indication information, the terminal device is allowed to access the NES cell; or
in a case that the barring parameter indicates that cell access is allowed, and the second message does not carry the first indication information, the terminal device is allowed to access the NES cell; or
in a case that the barring parameter indicates that cell access is allowed, and the second message does not carry the first indication information, the terminal device is not allowed to access the NES cell.

130. The network device according to claim 123 or 124, wherein the first indication information comprises a plurality of pieces of sub-information, the plurality of pieces of sub-information are in a one-to-one correspondence with a plurality of NES technologies, and a respective piece of sub-information in the plurality of pieces of sub-information is used to indicate:
whether a cell supports an NES technology corresponding to the respective piece of sub-information; or
whether a terminal device that supports an NES technology corresponding to the respective piece of sub-information is allowed to access a cell; or
whether a cell supports an NES technology corresponding to first sub-information, wherein the first sub-information is one of the plurality of pieces of sub-information; or
whether a terminal device that supports an NES technology corresponding to the first sub-information is allowed to access a cell.

131. The network device according to claim 130, wherein in a case that a second condition is met, whether the terminal device is allowed to access the NES cell is determined based on at least part of information in the plurality of pieces of sub-information, or whether the terminal device is allowed to access the NES cell is determined based on at least part of information in the first sub-information, and the second condition comprises one or more of following:
the first indication information indicates that cell access is allowed;
the first indication information indicates that cell access is not allowed;
a second message carries the first indication information;
a second message does not carry the first indication information;
the first sub-information exists or presents in the first indication information;
the first sub-information indicates permission;
the barring parameter is ignored; or
the barring parameter indicates permission.

132. The network device according to claim 130 or 131, wherein
whether a terminal device that supports a specific NES technology is capable of accessing the NES cell is controlled or determined based on sub-information corresponding to the specific NES technology; or
whether a specific terminal device is capable of accessing the NES cell is controlled or determined based on corresponding sub-information; or
whether a specific terminal device is capable of accessing the NES cell is controlled or determined based on the first sub-information.

133. The network device according to claim 123 or 124, wherein the first indication information comprises a plurality of pieces of second indication information, the plurality of pieces of second indication information are in a one-to-one correspondence with a plurality of NES technologies, and a respective piece of second indication information in the plurality of pieces of second indication information is used to indicate:
whether a cell supports an NES technology corresponding to the respective piece of second indication information; or
whether a terminal device that supports an NES technology corresponding to the respective piece of second indication information is allowed to access a cell; or
whether a cell supports an NES technology corresponding to target information, wherein the target information is one of the plurality of pieces of second indication information; or
whether a terminal device that supports an NES technology corresponding to the target information is allowed to access a cell.

134. The network device according to claim 133, wherein in a case that a third condition is met, whether the terminal device is allowed to access the NES cell is determined based on at least part of the plurality of pieces of second indication information, or whether the terminal device is allowed to access the NES cell is determined based on at least part of the target information, and the third condition comprises one or more of following:
the first indication information indicates that cell access is allowed;
the first indication information indicates that cell access is not allowed;
a second message carries the first indication information;
a second message does not carry the first indication information;
the target information exists or presents in the first indication information;
the target information indicates permission;
the barring parameter is ignored; or
the barring parameter indicates permission.

135. The network device according to claim 133 or 134, wherein
whether a terminal device that supports a specific NES technology is capable of accessing the NES cell is controlled or determined based on second indication information corresponding to the specific NES technology; or
whether a specific terminal device is capable of accessing the NES cell is controlled or determined based on corresponding second indication information; or
whether a specific terminal device is capable of accessing the NES cell is controlled or determined based on the target information.

136. The network device according to any one of claims 123 to 135, wherein the first indication information is carried in a master information block MIB or a SIB.

137. The network device according to claim 136, wherein the first indication information is carried in a SIB1.

138. The network device according to claims 123 to 137, wherein the terminal device is a first terminal device, and the first terminal device comprises one or more of following:
a terminal device that supports NES;
a terminal device defined in 3rd Generation Partnership Project 3GPP Release 19;
a terminal device that supports SSB-less;
a terminal device that supports SIB1-less; or
a terminal device that supports an adaptive NES technology.

139. The network device according to claim 122, wherein the second terminal device meets one of following:
the second terminal device is different from the first terminal device;
the second terminal device does not support NES; or
the second terminal device does not support a specific NES technology.

140. The network device according to claim 123 or 126, wherein the terminal device is not allowed to access the NES cell in a first case, and the first case comprises one or more of following:
no SIB1 transmitted from the NES cell is received;
the barring parameter indicates a barring cell;
part of or no common information is received from the NES cell; or
the NES cell is in an energy saving state.

141. A terminal device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 35.

142. A network device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 36 to 70.

143. An apparatus, comprising a processor, configured to invoke a program from a memory, to cause the apparatus to execute the method according to any one of claims 1 to 35 or claims 36 to 70.

144. A chip, comprising a processor, configured to invoke a program from a memory, to cause a device installed with the chip to execute the method according to any one of claims 1 to 35 or claims 36 to 70.

145. A computer-readable storage medium, storing a program, wherein the program causes a computer to execute the method according to any one of claims 1 to 35 or claims 36 to 70.

146. A computer program product, comprising a program, wherein the program causes a computer to execute the method according to any one of claims 1 to 35 or claims 36 to 70.

147. A computer program, wherein the computer program causes a computer to execute the method according to any one of claims 1 to 35 or claims 36 to 70.
